(19) **Europäisches Patentamt European Patent Office Office européen des brevets**

(11) **EP 4 387 140 B1**

(12) **EUROPEAN PATENT SPECIFICATION**

(45) Date of publication and mention
of the grant of the patent:
**27.05.2026 Bulletin 2026/22**

(21) Application number: **22866526.1**

(22) Date of filing: **02.09.2022**

(51) International Patent Classification (IPC):
*H04L 1/18* (2023.01)     *H04W 52/14* (2009.01)
*H04W 52/32* (2009.01)     *H04W 52/48* (2009.01)
*H04W 52/24* (2009.01)     *H04L 1/1822* (2023.01)
*H04L 1/1829* (2023.01)     *H04L 5/00* (2006.01)
*H04L 1/1812* (2023.01)

(52) Cooperative Patent Classification (CPC):
**H04L 1/18; H04L 1/1812; H04L 1/1822;
H04L 1/1854; H04L 5/00; H04L 5/0055;
H04W 52/146; H04W 52/246; H04W 52/325;
H04W 52/48; Y02D 30/70**

(86) International application number:
**PCT/CN2022/116781**

(87) International publication number:
**WO 2023/036063 (16.03.2023 Gazette 2023/11)**

(54) **METHODS AND DEVICES FOR POWER CONTROL IN A NODE FOR WIRELESS COMMUNICATION**

VERFAHREN UND VORRICHTUNGEN ZUR LEISTUNGSSTEUERUNG IN EINEM KNOTEN FÜR EINE DRAHTLOSE KOMMUNIKATION

PROCÉDÉS ET DISPOSITIFS POUR LA RÉGULATION DE PUISSANCE DANS UN NOEUD POUR UNE COMMUNICATION SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.09.2021   CN 202111060119
13.09.2021   CN 202111066486
14.10.2021   CN 202111196969**

(43) Date of publication of application:
**19.06.2024 Bulletin 2024/25**

(73) Proprietor: **Apogee 5G Global, LLC
Plano, TX 75024 (US)**

(72) Inventors:
• **HU, Yang
Shanghai 201206 (CN)**
• **ZHANG, Xiaobo
Shanghai 201206 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(56) References cited:
WO-A1-2021/073020    CN-A- 112 187 424
CN-A- 113 132 073    US-A1- 2019 313 342
US-A1- 2021 258 997

• **VIVO: "Remaining issues on HARQ operation for NR-U", vol. RAN WG1, no. e-Meeting; 20200525 - 20200605, 16 May 2020 (2020-05-16), XP051885162, Retrieved from the Internet <URL:https://ftp.3gpp.org/tsg_ran/WG1_RL1/TSGR1_101-e/Docs/R1-2003372.zip R1-2003372-Remaining issues on HARQ operation for NR-U.docx> [retrieved on 20200516]**

**(Cont. next page)**

- MODERATOR (NOKIA): "Moderator summary #3 on HARQ-ACK feedback enhancements for NR Rel-17 URLLC/IIoT", vol. RAN WG1, no. e-Meeting; 20210412 - 20210420, 16 April 2021 (2021-04-16), XP051995680, Retrieved from the Internet <URL:https://ftp.3gpp.org/tsg_ran/WG1_RL1/TSGR1_104b-e/Inbox/R1-2103883.zip R1-2103883_[104bis-e-NR-IIOT_URLLC_enh-01] _HARQ _enh_Summary#3.docx> [retrieved on 20210416]
- VIVO: "Remaining issues on HARQ operation for NR-U", 3GPP DRAFT; R1-2003372, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20200525 - 20200605, 16 May 2020 (2020-05-16), Mobile Competence Centre ; 650, route des Lucioles ; F-06921 Sophia-Antipolis Cedex ; France , XP051885162
- HUAWEI: "Feature lead summary#2 on NR-U HARQ and multi-PUSCH scheduling", 3GPP DRAFT; R1-2001191, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. 20200224 - 20200306, 24 February 2020 (2020-02-24), Mobile Competence Centre ; 650, route des Lucioles ; F-06921 Sophia-Antipolis Cedex ; France , XP051853733

# Description

## TECHNICAL FIELD

The present application relates to transmission methods and devices in wireless communication systems, and in particular to a method and device for radio signal transmission in a wireless communication system supporting non-terrestrial networks or cellular networks.

## BACKGROUND

The 3rd Generation Partner Project (3GPP) has agreed to support the configuration of Hybrid Automatic Repeat reQuest ACKnowledgement (HARQ-ACK) feedback enabling/disabling functionality for non-terrestrial networks (NTN) in the context of the NR Release 17 discussions.

The 105th meeting of 3GPP RAN1 has agreed that for Type-2 HARQ-ACK codebooks, the Downlink assignment index (DAI) field in the DCI that is used to schedule HARQ-ACK feedback-enabled PDSCHs only counts targeting the PDSCHs enabled by HARQ-ACK feedback.

Document "Remaining issues on HARQ operation for NR-U", vivo, 3GPP draft, R1-2003372, discloses an evaluation of NR-U Rel-16 HARQ operation. The following proposals were made. Proposal 1: When the RRC parameter NFI-TotalDAI-Included-r16 = enable and two sub-codebooks may be applied, i.e., PDSCH-CodeBlockGroupTransmission is provided at least for a serving cell, indicating separate total DAIs for each sub-codebook respectively for the non-scheduled PDSCH group in a non-fallback DCI format. Proposal 2: For enhanced dynamic codebook, $n_{HARQ-ACK}$ to apply should be the sum of $n_{HARQ-ACK, g}$ across all reported PDSCH group(s) in a PUCCH transmission occasion, i.e., $n_{HARQ-ACK} = \Sigma_g n_{HARQ-ACK, g}$, when the number of UCI bits for the PUCCH transmission occasion is smaller than or equal to 11. Proposal 3: When CBG-based HARQ-ACK reporting is enabled for a serving cell, spatial bundling is always disabled regardless of spatial bundling related configuration; otherwise spatial bundling is enabled based on whether harq-ACK-SpatialBundlingPUCCH is provided for the cell group of this serving cell. Proposal 4: When spatial bundling is enabled, the single HARQ-ACK value actually reported for HARQ process h of serving cell c is set to binary AND operation of the HARQ-ACK information bits corresponding to first and second TBs for HARQ process h of serving cell c. Proposal 5: When NDI is configured to be part of one-shot feedback and spatial bundling is enabled actually, for a HARQ process of a serving cell, the result of binary AND operation of the HARQ-ACK information bits corresponding to two TBs is followed by the NDI value for each TB in the order of increasing TB index. Proposal 6: When a DCI format 1_1 triggers one-shot feedback without scheduling PDSCH, a chosen set of unused fields in this DCI format is reinterpreted to assist one-shot HARQ-ACK reporting and control/reduce the codebook size. Proposal 7: Support HARQ-ACK feedback for SPS PDSCH release in one-shot HARQ-ACK codebook. HARQ-ACK corresponding to a SPS PDSCH release is mapped to a HARQ process in the one-shot feedback, where the HARQ process is determined based on the HARQ process ID derivation for SPS PDSCH in TS38.321 and the SPS PDSCH location for the derivation is determined based on the following options: Option 1: A SPS PDSCH location in time domain explicitly indicated by the SPS release DCI, e.g., by TDRA field in the DCI, or as well as by the slot/symbol where the SPS release DCI is detected. Option 2: A SPS PDSCH location in time domain implicitly derived according to the SPS configuration to which the SPS release DCI corresponds, e.g., the next SPS PDSCH occasion corresponding to the SPS configuration after the reception of the SPS release DCI. Proposal 8: UE is not expected to be required to report HARQ-ACK for a HARQ process which has been scheduled with a PDSCH without sufficient processing time when reporting one-shot HARQ-ACK codebook. Proposal 9: Adopt the text proposals listed in section 3.1 for Rel-16 TS38.213.

## SUMMARY

In the above context, since the transmission power of a PUCCH corresponding to the Type-2 HARQ-ACK codebook is related to the value of the DAI field, how to realize more accurate power control is an important issue to be studied.

To address the above problem, the present application provides a solution. It should be noted that while the above description uses HARQ-ACK feedback in NTN as an example, the present application is equally applicable to other scenarios such as, Multicast and Broadcast Services (MBS), Ultra Reliable and Low Latency Communication (URLLC), Sidelink, scenarios where physical layer signaling is used to dynamically indicate HARQ-ACK feedback enabling/disabling, etc., and achieve similar technical results. Additionally, the adoption of a unified solution for various scenarios, including but not limited to NTN, MBS, URLLC and SL, as well as scenarios using physical layer signaling to dynamically indicate HARQ-ACK feedback enabling/disabling, contributes to the reduction of hardcore complexity and costs, or the enhancement of performance. It should be noted that if no conflict is incurred, embodiments in any node in the present application and the characteristics of the embodiments are also applicable to any other node, and vice versa. What's more, the embodiments in the present application and the characteristics in the embodiments can be arbitrarily combined if there is no conflict.

In one embodiment, interpretations of the terminology in the present application refer to definitions given in the 3GPP TS36 series.

In one embodiment, interpretations of the terminology in the present application refer to definitions given in the 3GPP TS38 series.

In one embodiment, interpretations of the terminology in the present application refer to definitions given in the 3GPP TS37 series.

In one embodiment, interpretations of the terminology in the present application refer to definitions given in Institute of Electrical and Electronics Engineers (IEEE) protocol specifications.

According to the present disclosure, there are provided a UE, a base station and methods according to the independent claims. Further developments are set forth in the dependent claims.

According to a first aspect of the present disclosure, there is provided a user equipment, UE, as defined in claim 1.

According to a second aspect of the present disclosure, there is provided a base station as defined in claim 7.

According to a third aspect of the present disclosure, there is provided a method performed by a user equipment, UE as defined in claim 9.

According to a fourth aspect of the present disclosure, there is provided a method performed by a base station as defined in claim 15.

Whenever in the following disclosure any feature of the aspects (independent claims) just referenced is disclosed as "optional" (e.g., due to usage of conjunctive terms, such as "can", "may", "should" etc.), it is nevertheless to be read as "mandatory".

As an example, there is a method in a first node for wireless communications, comprising:

receiving a first information block and a first signaling set, the first signaling set comprising multiple control signalings, and a first control signaling being a control signaling comprised in the first signaling set; and transmitting a first PUCCH with a first transmission power, the first PUCCH carrying at least one HARQ-ACK bit;

herein, a first reference HARQ-ACK bit number is used to determine the first transmission power, the first reference HARQ-ACK bit number being a positive integer; the first control signaling comprises a first field, a value of the first field comprised in the first control signaling being a positive integer; a first intermediate quantity is used to determine the first reference HARQ-ACK bit number, the first intermediate quantity being linear with the value of the first field comprised in the first control signaling; the first signaling set comprises a target signaling subset, the target signaling subset comprising at least one control signaling, the first intermediate quantity being linear with a number of control signaling(s) comprised in the target signaling subset, the first information block being used to determine whether the first control signaling belongs to the target signaling subset.

For example, a problem to be addressed by the present application includes how to reasonably and efficiently use the value of the DAI field in the DCI format used to schedule the HARQ-ACK feedback disabled HARQ process for PUCCH power control.

For example, a problem to be addressed by the present application includes how to achieve accurate PUCCH power control after being configured with HARQ-ACK feedback enabling and de-enabling functions.

For example, a problem to be addressed by the present application includes how to determine the transmission power of the first PUCCH.

For example, a problem to be addressed by the present application includes how to increase the accuracy of PUCCH power control.

For example, a problem to be addressed by the present application includes how to enhance the uplink transmission performance.

For example, a problem to be addressed by the present application includes how to reduce inter-user interference.

For example, a problem to be addressed by the present application includes how to realize power control of PUCCH in NTN scenarios.

For example, a problem to be addressed by the present application includes how to realize power control of PUCCH in multicast-supporting scenarios.

For example, a problem to be addressed by the present application includes how to realize power control of PUCCH in URLLC scenarios.

For example, characteristics of the above method include: the target signaling subset used to determine the transmission power of the PUCCH is dependent on the first information block.

For example, characteristics of the above method include: the first control signaling may be a DCI format used to schedule the HARQ-ACK feedback enabled HARQ process or a DCI format used to schedule the HARQ-ACK feedback disabled HARQ process, and the target signaling subset does not include any DCI format being used to schedule the HARQ-ACK feedback disabled HARQ process.

For example, characteristics of the above method include: in a conventional scheme of PUCCH power control, the target signaling subset is the first signaling set, and therefore a DCI format to which the DAI field being used to determine the first reference HARQ-ACK bit number belongs is always one signaling in the target signaling subset; contrary to the conventional scheme of PUCCH power control, in the method disclosed in the present application: under a particular condition (e.g., the first control signaling indicates a HARQ process being configured as HARQ-ACK feedback disabled by the first information block), the DCI format (i.e., the first control signaling) to which the DAI field being used to determine the first reference HARQ-ACK bit number belongs does not belong to the target signaling subset.

For example, characteristics of the above method include: a DCI format that indicates HARQ-ACK feedback disabled HARQ process and is not the last in the first signaling set (or not detected in the last PDCCH monitoring occasion) is not used to determine the first transmission power.

For example, characteristics of the above method include: determining, based on the configuration or indication of the first information block, whether the first control signaling is counted for the number of control signalings comprised in the target signaling subset based on whether the first control signaling indicates HARQ-ACK feedback disabling.

For example, an advantage of the above method includes: enhancing consistency in the understanding by both communicating parties of the number of HARQ-ACK bits being fed back.

For example, an advantage of the above method includes: the new interpretation of the DAI field is effectively utilized to achieve more accurate PUCCH power control.

For example, an advantage of the above method includes: helping provide more precise uplink power control.

For example, an advantage of the above method includes: avoiding unnecessary power waste.

For example, an advantage of the above method includes: saving communication resources.

For example, an advantage of the above method includes: lowering workload required for standardization.

For example, the above method is characterized in that,
the first intermediate quantity is equal to the value of the first field comprised in the first control signaling being subtracted by the number of control signaling(s) comprised in the target signaling subset.

For example, the above method is characterized in that,
the first reference HARQ-ACK bit number is linear with a second intermediate quantity, and the second intermediate quantity is equal to a result yielded by the first intermediate quantity modulo a first value then being multiplied by a second value; the first value is equal to 2 to the power of T, T being a number of bits comprised in a counter DAI field, and the second value is a positive integer.

For example, the above method is characterized in that,
the first information block is used to determine which HARQ processes in a first HARQ process set are HARQ processes of a first type, and the first control signaling is used to indicate a target HARQ process, the target HARQ process being a HARQ process in the first HARQ process set; when the target HARQ process is a HARQ process of the first type, the first control signaling does not belong to the target signaling subset; when the target HARQ process is not a HARQ process of the first type, the first control signaling belongs to the target signaling subset.

For example, characteristics of the above method include: unlike the conventional scheme for PUCCH power control, in the method disclosed in the present application: the DCI format (i.e., said first control signaling) to which the DAI field being used to determine the first reference HARQ-ACK bit number belongs does not belong to the target signaling subset, under a particular condition (e.g., that the first control signaling indicates a HARQ process configured to be HARQ-ACK feedback disabled by the first information block).

For example, characteristics of the above method include: determining, based on the configuration information in the first information block and the HARQ process indicated in the first control signaling, whether or not the first control signaling is counted for the number of control signalings comprised in the target signaling subset.

For example, the above method is characterized in that,
the first control signaling is a last DCI format in the first signaling set.

For example, the above method is characterized in that,
all control signalings in the first signaling set are detected in a first resource pool, the first resource pool comprising at least one time interval in time domain; the first control signaling is detected in a last one of the at least one time interval.

For example, the above method is characterized in comprising:

receiving a first PDSCH group;
herein, the first PDSCH group comprises at least one PDSCH, and at least one control signaling in the target signaling subset is used to schedule the first PDSCH group, the first PDSCH group being used to determine the first reference HARQ-ACK bit number.

For example, the above method is characterized in that,
the first reference HARQ-ACK bit number is used to determine a target amount of adjustment, and the first transmission power is equal to a smaller value between an upper-limit transmission power and a target transmission power, the target amount of adjustment being used to determine the target transmission power, and the upper-limit transmission power being default or configurable.

For example, there is a method in a second node for wireless communications, comprising:

transmitting a first information block and a first signaling set, the first signaling set comprising multiple control signalings, and a first control signaling being a control signaling comprised in the first signaling set; and
receiving a first PUCCH transmitted with a first transmission power, the first PUCCH carrying at least one HARQ-ACK bit;

herein, a first reference HARQ-ACK bit number is used to determine the first transmission power, the first reference HARQ-ACK bit number being a positive integer; the first control signaling comprises a first field, a value of the first field comprised in the first control signaling being a positive integer; a first intermediate quantity is used to determine the first reference HARQ-ACK bit number, the first intermediate quantity being linear with the value of the first field comprised in the first control signaling; the first signaling set comprises a target signaling subset, the target signaling subset comprising at least one control signaling, the first intermediate quantity being linear with a number of control signaling(s) comprised in the target signaling subset, the first information block being used to determine whether the first control signaling belongs to the target signaling subset.

For example, the above method is characterized in that,
the first intermediate quantity is equal to the value of the first field comprised in the first control signaling being subtracted by the number of control signaling(s) comprised in the target signaling subset.

For example, the above method is characterized in that,
the first reference HARQ-ACK bit number is linear with a second intermediate quantity, and the second intermediate quantity is equal to a result yielded by the first intermediate quantity modulo a first value then being multiplied by a second value; the first value is equal to 2 to the power of T, T being a number of bits comprised in a counter DAI field, and the second value is a positive integer.

For example, the above method is characterized in that,
the first information block is used to determine which HARQ processes in a first HARQ process set are HARQ processes of a first type, and the first control signaling is used to indicate a target HARQ process, the target HARQ process being a HARQ process in the first HARQ process set; when the target HARQ process is a HARQ process of the first type, the first control signaling does not belong to the target signaling subset; when the target HARQ process is not a HARQ process of the first type, the first control signaling belongs to the target signaling subset.

For example, the above method is characterized in that,
the first control signaling is a last DCI format in the first signaling set.

For example, the above method is characterized in that,
all control signalings in the first signaling set are detected in a first resource pool, the first resource pool comprising at least one time interval in time domain; the first control signaling is detected in a last one of the at least one time interval.

For example, the above method is characterized in comprising:

transmitting a first PDSCH group;
herein, the first PDSCH group comprises at least one PDSCH, and at least one control signaling in the target signaling subset is used to schedule the first PDSCH group, the first PDSCH group being used to determine the first reference HARQ-ACK bit number.

For example, the above method is characterized in that,
the first reference HARQ-ACK bit number is used to determine a target amount of adjustment, and the first transmission power is equal to a smaller value between an upper-limit transmission power and a target transmission power, the target amount of adjustment being used to determine the target transmission power, and the upper-limit transmission power being default or configurable.

For example, the present application provides a first node for wireless communications, comprising:

a first receiver, receiving a first information block and a first signaling set, the first signaling set comprising multiple control signalings, and a first control signaling being a control signaling comprised in the first signaling set; and
a first transmitter, transmitting a first PUCCH with a first transmission power, the first PUCCH carrying at least one HARQ-ACK bit;
herein, a first reference HARQ-ACK bit number is used to determine the first transmission power, the first reference HARQ-ACK bit number being a positive integer; the first control signaling comprises a first field, a value of the first field comprised in the first control signaling being a positive integer; a first intermediate quantity is used to determine the first reference HARQ-ACK bit number, the first intermediate quantity being linear with the value of the first field comprised in the first control signaling; the first signaling set comprises a target signaling subset, the target signaling subset comprising at least one control signaling, the first intermediate quantity being linear with a number of control signaling(s) comprised in the target signaling subset, the first information block being used to determine whether the first control signaling belongs to the target signaling subset.

For example, the present application provides a second node for wireless communications, comprising:

a second transmitter, transmitting a first information block and a first signaling set, the first signaling set comprising multiple control signalings, and a first control signaling being a control signaling comprised in the first signaling set; and

a second receiver, receiving a first PUCCH transmitted with a first transmission power, the first PUCCH carrying at least one HARQ-ACK bit;

herein, a first reference HARQ-ACK bit number is used to determine the first transmission power, the first reference HARQ-ACK bit number being a positive integer; the first control signaling comprises a first field, a value of the first field comprised in the first control signaling being a positive integer; a first intermediate quantity is used to determine the first reference HARQ-ACK bit number, the first intermediate quantity being linear with the value of the first field comprised in the first control signaling; the first signaling set comprises a target signaling subset, the target signaling subset comprising at least one control signaling, the first intermediate quantity being linear with a number of control signaling(s) comprised in the target signaling subset, the first information block being used to determine whether the first control signaling belongs to the target signaling subset.

The method in the present application has the following advantages:

- enhancing consistent understanding of HARQ-ACK feedback for both sides of communication;
- based on the existing PUCCH power control framework, the new interpretation of the DAI field is effectively utilized to achieve more accurate PUCCH power control;
- avoiding unnecessary waste of resources;
- minimizing the workload needed for standardization.

**BRIEF DESCRIPTION OF THE DRAWINGS**

Hereinabove and in the following, "examples" pertain to principles underlying the claimed subject-matter and/or being useful for understanding the claimed subject-matter, while "embodiments" pertain to the claimed subject-matter within the claim scope. Other features, objects and advantages of the present application will become more apparent from the detailed description of non-restrictive embodiments taken in conjunction with the following drawings:

FIG. 1 illustrates a flowchart of processing of a first node according to an embodiment of the present disclosure.
FIG. 2 illustrates a schematic diagram of a network architecture according to an example.
FIG. 3 illustrates a schematic diagram of a radio protocol architecture of a user plane and a control plane according to an example.
FIG. 4 illustrates a schematic diagram of a first communication device and a second communication device according to an example.
FIG. 5 illustrates a flowchart of signal transmission according to an embodiment of the present disclosure.
FIG. 6 illustrates a schematic diagram of relations among a first reference HARQ-ACK bit number, a second intermediate quantity and a first intermediate quantity according to an embodiment of the present disclosure.
FIG. 7 illustrates a schematic diagram of relations among a first reference HARQ-ACK bit number, a second intermediate quantity and a first intermediate quantity according to an embodiment of the present disclosure.
FIG. 8 illustrates a schematic diagram explaining a first intermediate quantity according to an embodiment of the present disclosure.
FIG. 9 illustrates a schematic diagram explaining a first information block being used to determine whether a first control signaling belongs to a target signaling subset according to an embodiment of the present disclosure.
FIG. 10 illustrates a schematic diagram of relations among a first reference HARQ-ACK bit number, a first UCI bit number, a first resource volume and a target amount of adjustment according to an embodiment of the present disclosure.
FIG. 11 illustrates a schematic diagram of relations among a first transmission power, a target transmission power and a target amount of adjustment according to an embodiment of the present disclosure.
FIG. 12 illustrates a schematic diagram explaining a first control signaling according to an embodiment of the present disclosure.
FIG. 13 illustrates a schematic diagram explaining a first control signaling according to an embodiment of the present disclosure.
FIG. 14 illustrates a structure block diagram of a processing device in a first node according to an embodiment of the present disclosure.
FIG. 15 illustrates a structure block diagram of a processing device in a second node according to an embodiment of the present disclosure.

Whenever in the following disclosure the term "embodiment" occurs, reference is to be made to the figure description above to clarify whether an embodiment or an example is meant.

**DESCRIPTION OF THE EMBODIMENTS**

The technical scheme of the present application is described below in further details in conjunction with the drawings. It should be noted that the embodiments of the present application and the characteristics of the embodiments may be arbitrarily combined if no conflict is caused.

## Embodiment 1

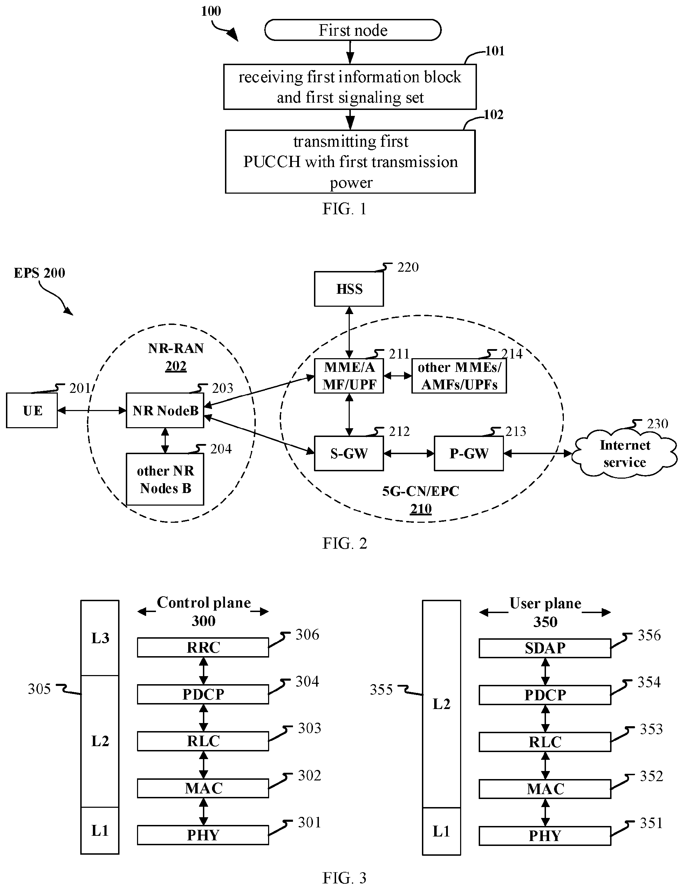

Embodiment 1 illustrates a flowchart of processing of a first node according to one embodiment of the present application, as shown in FIG. 1.

In Embodiment 1, the first node in the present application receives a first information block and a first signaling set in step 101; and transmits a first PUCCH with a first transmission power in step 102.

In Embodiment 1, the first signaling set comprises multiple control signalings, and a first control signaling is a control signaling comprised in the first signaling set; the first PUCCH carries at least one HARQ-ACK bit; a first reference HARQ-ACK bit number is used to determine the first transmission power, the first reference HARQ-ACK bit number being a positive integer; the first control signaling comprises a first field, a value of the first field comprised in the first control signaling being a positive integer; a first intermediate quantity is used to determine the first reference HARQ-ACK bit number, the first intermediate quantity being linear with the value of the first field comprised in the first control signaling; the first signaling set comprises a target signaling subset, the target signaling subset comprising at least one control signaling, the first intermediate quantity being linear with a number of control signaling(s) comprised in the target signaling subset, the first information block being used to determine whether the first control signaling belongs to the target signaling subset.

In one embodiment, the first information block is a physical layer signaling;
In one embodiment, the first information block is a higher layer signaling.

In one embodiment, the first information block is an RRC signaling.

In one embodiment, the first information block comprises one or more fields in an RRC signaling.

In one embodiment, the first information block comprises one Information Element (IE).

In one embodiment, the first information block is an IE.

In one embodiment, the first information block comprises one or more fields in an IE.

In one embodiment, the first information block is a Medium Access Control layer Control Element (MAC CE) signaling.

In one embodiment, the first information block comprises one or more fields in a MAC CE signaling.

In one embodiment, a name of the first information block includes PDSCH-ServingCellConfig.

In one embodiment, a name of the first information block includes ServingCellConfig.

In one embodiment, a name of the first information block includes PDSCH.

In one embodiment, a name of the first information block includes CellGroupConfig.

In one embodiment, the first information block comprises a PDSCH-ServingCellConfig.

In one embodiment, a control signaling in the first signaling set is a physical layer signaling.

In one embodiment, a control signaling in the first signaling set is Downlink control information (DCI).

In one embodiment, a control signaling in the first signaling set is a DCI format.

In one embodiment, a control signaling in the first signaling set comprises one or more fields in a DCI format.

In one embodiment, a control signaling in the first signaling set is one of DCI format 1_0, DCI format 1_1 or DCI format 1_2.

In one embodiment, a control signaling in the first signaling set is DCI format 1_0, for the specific definition of the DCI format 1_0, refer to 3GPP TS38.212, Section 7.3.1.2.

In one embodiment, a control signaling in the first signaling set is DCI format 1_1, for the specific definition of the DCI format 1_1, refer to 3GPP TS38.212, Section 7.3.1.2.

In one embodiment, a control signaling in the first signaling set is DCI format 1_2, for the specific definition of the DCI format 1_2, refer to 3GPP TS38.212, Section 7.3.1.2.

In one embodiment, a control signaling in the first signaling set is a higher layer signaling.

In one embodiment, a control signaling in the first signaling set is an RRC signaling.

In one embodiment, a control signaling in the first signaling set comprises one or more fields in an RRC signaling.

In one embodiment, a control signaling in the first signaling set comprises one Information Element (IE).

In one embodiment, a control signaling in the first signaling set is an IE.

In one embodiment, a control signaling in the first signaling set comprises one or more fields in an IE.

In one embodiment, a control signaling in the first signaling set is a MAC CE signaling.

In one embodiment, a control signaling in the first signaling set comprises one or more fields in a MAC CE signaling.

In one embodiment, a control signaling in the first signaling set is a DownLink Grant Signaling.

In one embodiment, a control signaling in the first signaling set is an UpLink Grant Signalling.

In one embodiment, each control signaling in the first signaling set is a DCI format.

In one embodiment, one of the control signalings in the present application is a DCI format.

In one embodiment, one of the control signalings in the present application comprises one or more fields in a DCI format.

In one embodiment, one of the control signalings in the present application is one of DCI format 1_0, DCI format 1_1 or DCI format 1_2.

In one embodiment, one of the control signalings in the present application is a physical layer signaling.

In one embodiment, one of the control signalings in the present application is a higher layer signaling.

In one embodiment, all control signalings in the first signaling set are detected in a first resource pool, the first resource pool comprising at least one time interval in time domain, the first resource pool comprising at least one serving cell in frequency domain.

In one embodiment, all control signalings in the first signaling set are detected in a first resource pool, the first resource pool comprising resources determined by at least one {serving cell, time interval}-pair.

In one embodiment, all control signalings in the first signaling set are detected in a first resource pool, the first resource pool comprising at least one time interval on at least one serving cell.

In one embodiment, the first control signaling is a DCI.

In one embodiment, the first control signaling is a DCI format.

In one embodiment, the first control signaling comprises one or more fields in a DCI format.

In one embodiment, the first control signaling is one of DCI format 1_0, DCI format 1_1 or DCI format 1_2.

In one embodiment, the first control signaling is DCI format 1_0.

In one embodiment, the first control signaling is DCI format 1_1.

In one embodiment, the first control signaling is DCI format 1_2.

In one embodiment, the first control signaling is DCI format 1_0, for the specific definition of the DCI format 1_0, refer to 3GPP TS38.212, Section 7.3.1.2.

In one embodiment, the first control signaling is DCI format 1_1, for the specific definition of the DCI format 1_1, refer to 3GPP TS38.212, Section 7.3.1.2.

In one embodiment, the first control signaling is DCI format 1_2, for the specific definition of the DCI format 1_2, refer to 3GPP TS38.212, Section 7.3.1.2.

In one embodiment, the first transmission power is measured in dBm.

In one embodiment, the first transmission power is measured in Watts (W).

In one embodiment, the first transmission power is measured in mW.

In one embodiment, the statement of transmitting a first PUCCH with a first transmission power, the first PUCCH carrying at least one HARQ-ACK bit in the present application means: transmitting at least one HARQ-ACK bit in the first PUCCH with the first transmission power.

In one embodiment, an output by the at least one HARQ-ACK bit after having been through at least part of CRC attachment, Code Block Segmentation, Code Block CRC attachment, Channel Coding, Rate Matching, Code Block Concatenation, Scrambling, Modulation, Spreading, Layer Mapping, Precoding, Mapping to Physical Resources, Multicarrier Symbol Generation, and Modulation and Upconversion is transmitted in the first PUCCH.

In one embodiment, an output by the at least one HARQ-ACK bit after having been through at least part of Channel coding, Rate matching, Scrambling, Modulation, Spreading, and Mapping to Physical Resources is transmitted in the first PUCCH.

In one embodiment, an output by the at least one HARQ-ACK bit after having been through at least part of Channel Coding, Rate matching, Scrambling, Modulation, Block-wise spreading, Transform precoding, and Mapping to Physical Resources, is transmitted in the first PUCCH.

In one embodiment, the at least one HARQ-ACK bit has been through at least Channel Coding, Rate matching, Scrambling, Modulation, and Mapping to Physical Resources before being transmitted in the first PUCCH.

In one embodiment, the at least one HARQ-ACK bit has been through at least Channel Coding, Rate matching, Scrambling, Modulation, Spreading and Mapping to Physical Resources before being transmitted in the first PUCCH.

In one embodiment, the at least one HARQ-ACK bit has been through at least Channel Coding, Rate matching, Scrambling, Modulation, Block-wise spreading, Transform precoding and Mapping to Physical Resources before being transmitted in the first PUCCH.

In one embodiment, the number of bits transmitted in the first PUCCH does not exceed 11.

In one embodiment, the number of UCI bits transmitted in the first PUCCH does not exceed 11.

In one embodiment, a total number of UCI bits carried by the first PUCCH does not exceed 11.

In one embodiment, a total number of UCI bits carried by the first PUCCH does not exceed 1706.

In one embodiment, a HARQ-ACK bit in the present application is a HARQ-ACK information bit.

In one embodiment, the first reference HARQ-ACK bit number is used to indicate the first transmission power.

In one embodiment, the first reference HARQ-ACK bit number is used to implicitly indicate the first transmission power.

In one embodiment, the first transmission power is linear with the first reference HARQ-ACK bit number.

In one embodiment, the first transmission power is proportional to the first reference HARQ-ACK bit number.

In one embodiment, the first reference HARQ-ACK bit number is used to determine a target amount of adjustment, the target amount of adjustment being used to determine the first transmission power.

In one embodiment, the first transmission power is equal to a smaller value between an upper-limit transmission power and a target transmission power, the first reference HARQ-ACK bit number being used to determine the target transmission power, and the upper-limit transmission power being default or configurable.

In one embodiment, the statement that a first reference HARQ-ACK bit number is used to determine the first transmission power in the present application includes that the first reference HARQ-ACK bit number is used to determine a target amount of adjustment, and the first transmission power is equal to a smaller value between an upper-limit transmission power and a target transmission power, the target amount of adjustment being used to determine the target transmission power, and the upper-limit transmission power being default or configurable.

In one embodiment, the first reference HARQ-ACK bit number is no greater than 11.

In one embodiment, the first reference HARQ-ACK bit number is no greater than 1706.

In one embodiment, the first reference HARQ-ACK bit number is denoted by $n_{HARQ-ACK}$.

In one embodiment, the first reference HARQ-ACK bit number is denoted by $n_{HARQ-ACK,TB}$.

In one embodiment, the first reference HARQ-ACK bit number is denoted by $n_{HARQ-ACK,CBG}$.

In one embodiment, the first reference HARQ-ACK bit number is denoted by symbols including $n$ and HARQ-ACK.

In one embodiment, the first reference HARQ-ACK bit number is a number of HARQ-ACK bit(s) determined for obtaining a transmission power of PUCCH.

In one embodiment, the first field is a Downlink assignment index (DAI) field.

In one embodiment, the first field is a counter DAI field.

In one embodiment, the first field is a total DAI field.

In one embodiment, the first field comprises 1 bit.

In one embodiment, the value of the first field comprised in the first control signaling is 1 or 2.

In one embodiment, the first field comprises 2 bits.

In one embodiment, the value of the first field comprised in the first control signaling is one of 1, 2, 3, or 4.

In one embodiment, the first field comprises no more than 10 bits.

In one embodiment, the value of the first field comprised in the first control signaling is no greater than 1024.

In one embodiment, the first intermediate quantity is used to indicate the first reference HARQ-ACK bit number.

In one embodiment, the first intermediate quantity is used to implicitly indicate the first reference HARQ-ACK bit number.

In one embodiment, the first intermediate quantity is used for performing a calculation to obtain the first reference HARQ-ACK bit number.

In one embodiment, the statement in the present application that a first intermediate quantity is used to determine the first reference HARQ-ACK bit number includes that: the first reference HARQ-ACK bit number is linear with a second intermediate quantity, and the second intermediate quantity is equal to a result yielded by the first intermediate quantity modulo a first value then being multiplied by a second value; the first value is a positive integer greater than 1, and the second value is a positive integer.

In one embodiment, the statement in the present application that a first intermediate quantity is used to determine the first reference HARQ-ACK bit number includes that: the first reference HARQ-ACK bit number is equal to a sum of multiple values, a second intermediate quantity is one of the multiple values, and the second intermediate quantity is equal to a result yielded by the first intermediate quantity modulo a first value then being multiplied by a second value, the first value is a positive integer greater than 1, and the second value is a positive integer.

In one embodiment, the first control signaling and control signalings in the target signaling subset are all used to schedule Transport Block (TB) based PDSCH reception.

In one embodiment, HARQ-ACK bits carried in the first PUCCH are all HARQ-ACK bits for Transport Block (TB) based PDSCH reception.

In one embodiment, the first PUCCH carries at least one HARQ-ACK bit for CBG based PDSCH reception.

In one embodiment, the first control signaling and control signalings in the target signaling subset are all used to schedule CBG based PDSCH reception.

In one embodiment, the statement of the first intermediate quantity being linear with the value of the first field comprised in the first control signaling in the present application includes that: the first intermediate quantity is equal to a sum of multiple terms after being weighted, the value of the first field comprised in the first control signaling being one of the multiple terms.

In one embodiment, the statement of the first intermediate quantity being linear with the value of the first field comprised in the first control signaling in the present application includes that: the first intermediate quantity is equal to a difference between two terms, the value of the first field comprised in the first control signaling being a minuend of the two terms.

In one embodiment, the statement of the first intermediate quantity being linear with the value of the first field comprised in the first control signaling in the present application includes that: the first intermediate quantity is equal to the value of the first field comprised in the first control signaling being subtracted by the number of control signaling(s) comprised in the target signaling subset.

In one embodiment, the statement of the first intermediate quantity being linear with a number of control signaling(s) comprised in the target signaling subset in the present application includes that: the first intermediate quantity is equal to a sum of multiple terms after being weighted, the number of control signaling(s) comprised in the target signaling subset being one of the multiple terms.

In one embodiment, the statement of the first intermediate quantity being linear with a number of control signaling(s) comprised in the target signaling subset in the present application includes that: the first intermediate quantity is equal to a difference between two terms, the number of control signaling(s) comprised in the target signaling subset being a subtrahend of the two terms.

In one embodiment, the statement of the first intermediate quantity being linear with a number of control signaling(s) comprised in the target signaling subset in the present application includes that: the first intermediate quantity is equal to the value of the first field comprised in the first control signaling being subtracted by the number of control signaling(s) comprised in the target signaling subset.

In one embodiment, the first intermediate quantity is equal to the value of the first field comprised in the first control signaling being added to the number of control signaling(s) comprised in the target signaling subset.

In one embodiment, the first intermediate quantity is equal to the value of the first field comprised in the first control signaling being added to the number of control signaling(s) comprised in the target signaling subset plus 1.

In one embodiment, the first information block is used to indicate whether the first control signaling belongs to the target signaling subset.

In one embodiment, the first information block is used to explicitly indicate whether the first control signaling belongs to the target signaling subset.

In one embodiment, the first information block is used to implicitly indicate whether the first control signaling belongs to the target signaling subset.

In one embodiment, configuration information in the first information block is used to determine whether the first control signaling belongs to the target signaling subset.

In one embodiment, the statement of the first information block being used to determine whether the first control signaling belongs to the target signaling subset in the present application includes that the first information block is used to determine which HARQ processes in a first HARQ process set are HARQ processes of a first type, and the first control signaling is used to indicate a target HARQ process, the target HARQ process being a HARQ process in the first HARQ process set; when the target HARQ process is a HARQ process of the first type, the first control signaling belongs to the target signaling subset; when the target HARQ process is not a HARQ process of the first type, the first control signaling does not belong to the target signaling subset.

In one embodiment, the statement of the first information block being used to determine whether the first control signaling belongs to the target signaling subset in the present application includes that the first information block is used to determine which HARQ processes in a first HARQ process set are HARQ processes of a first type, and the first control signaling is used to indicate a target HARQ process, the target HARQ process being a HARQ process in the first HARQ process set; when the target HARQ process is a HARQ process of the first type, the first control signaling does not belong to the target signaling subset; when the target HARQ process is not a HARQ process of the first type, the first control signaling belongs to the target signaling subset.

In one embodiment, a sum of multiple reference HARQ-ACK bit numbers is used to determine the first transmission power, with the first reference HARQ-ACK bit number being one of the multiple reference HARQ-ACK bit numbers; each of the multiple reference HARQ-ACK bit numbers is a number of HARQ-ACK bit(s) determined for obtaining a transmission power of PUCCH.

In one embodiment, any of the multiple reference HARQ-ACK bit numbers is equal to a non-negative integer.

In one embodiment, the multiple reference HARQ-ACK bit numbers respectively correspond to different HARQ-ACK sub-codebooks.

In one embodiment, one of the multiple reference HARQ-ACK bit numbers is for CBG based PDSCH reception.

In one embodiment, the first information block comprises HARQ process related information, and the HARQ process related information in the first information block and a HARQ process indicated by the first control signaling are used together to determine whether the first control signaling belongs to the target signaling subset.

In one embodiment, the first information block comprises configuration information for HARQ processes, and the configuration information for HARQ processes in the first information block and a HARQ process indicated by the first control signaling are used together to determine whether the first control signaling belongs to the target signaling subset.

In one embodiment, the first reference HARQ-ACK bit number is not greater than a number of HARQ-ACK bits carried in the first PUCCH.

In one embodiment, the first reference HARQ-ACK bit number is less than a number of HARQ-ACK bits carried in the first PUCCH.

In one embodiment, the first PUCCH is used for transmitting a Type-2 HARQ-ACK Codebook.

In one embodiment, each HARQ-ACK bit carried in the first PUCCH belongs to a Type-2 HARQ-ACK codebook.

In one embodiment, the first node is not configured with the function of indicating HARQ feedback enabling or disabling with a DCI.

In one embodiment, a UE specific RRC signaling is used to configure HARQ feedback enabling or disabling for each HARQ process.

In one embodiment, reception of SPS PDSCH is configured for the first node and activated.

In one embodiment, the first node is not configured to receive SPS PDSCH.

In one embodiment, the first information block comprises one field in a DCI format.

In one embodiment, the first control signaling and the first information block belong to a same DCI format.

In one embodiment, the first control signaling comprises one or more fields in a DCI format, and the first information block comprises one or more fields in the DCI format other than the first control signaling.

In one embodiment, the first control signaling and the first information block are received simultaneously.

In one embodiment, the first control signaling and the first information block are received in a same PDCCH.

In one embodiment, when a value of the first information block is equal to a first target value, the first control signaling does not belong to the target signaling subset; when the first information block is unequal to a first target value, the first control signaling belongs to the target signaling subset; the first target value is a non-negative integer.

In one embodiment, when a value of the first information block is equal to a first target value, the first control signaling does not belong to the target signaling subset; when the first information block is unequal to a first target value, the first control signaling belongs to the target signaling subset; the first target value is a non-negative integer.

In one embodiment, the first target value is 0.

In one embodiment, the first target value is 1.

In one embodiment, the first target value is a value represented by all-zero bits or a value represented by all-one bits.

In one embodiment, the first information block comprises only 1 bit, and the first target value is 0.

In one embodiment, the first information block comprises only 1 bit, and the first target value is 1.

In one embodiment, the first information block comprises 2 bits, and the first target value is 00.

In one embodiment, the first information block comprises 2 bits, and the first target value is 11.

In one embodiment, the first information block comprises 2 bits, and the first target value is 10.

In one embodiment, the first information block comprises 2 bits, and the first target value is 01.

In one embodiment, the first information block comprises 3 bits, and the first target value is 000.

In one embodiment, the first information block comprises 3 bits, and the first target value is 111.

In one embodiment, the first information block comprises multiple bits.

In one embodiment, the first control signaling comprises a second field, and the second field in the first control signaling is used to determine whether the first control signaling belongs to the target signaling subset.

In one embodiment, the first control signaling comprises a second field, and the second field in the first control signaling and the first information block are both used to determine whether the first control signaling belongs to the target signaling subset.

In one embodiment, the first control signaling comprises a second field, and the second field in the first control signaling and the first information block jointly indicate whether the first control signaling belongs to the target signaling subset.

In one embodiment, the first control signaling comprises a second field, and the first information block is used to determine that the first control signaling belongs to the first signaling set, the second field in the first control signaling being used to determine whether the first control signaling belongs to the target signaling subset.

In one embodiment, the first information block indicates that the first control signaling belongs to the first signaling set.

In one embodiment, information configured by the first information block is used for any signaling in the first signaling set, the first control signaling using the information configured by the first information block.

In one embodiment, based on configuration of the first information block, the first node determines that the first control signaling belongs to the first signaling set.

In one embodiment, based on configuration of the first information block and indication of the first control signaling, the first node determines that the first control signaling belongs to the first signaling set.

In one embodiment, a CRC that any signaling in the first signaling set has is scrambled by a G-RNTI.

In one embodiment, a CRC that any signaling in the first signaling set has is scrambled by a same G-RNTI.

In one embodiment, a CRC that any signaling in the first signaling set has is scrambled by a G-RNTI or a G-CS-RNTI.

In one embodiment, a CRC that any signaling in the first signaling set has is scrambled by a G-RNTI or a G-CS-RNTI or a MCS-G-RNTI.

In one embodiment, the statement of the first information block being used to determine whether the first control signaling belongs to the target signaling subset includes that the first information block is used to determine that the first control signaling comprises a second field, the second field in the first control signaling being used to determine whether the first control signaling belongs to the target signaling subset.

In one embodiment, the first information block is used to determine that the first control signaling comprises a second field, the second field in the first control signaling being used to determine whether the first control signaling belongs to the target signaling subset.

In one subembodiment, characteristics of the above method include: determining whether the first control signaling is counted for the number of control signaling(s) in the target signaling subset according to whether the first control signaling indicates HARQ-ACK feedback disabling.

In one embodiment, the first information block configures that the first control signaling comprises the second field.

In one embodiment, the first information block indicates that the first control signaling comprises the second field.

In one embodiment, the first information block explicitly indicates that the first control signaling comprises the second field.

In one embodiment, the first information block implicitly indicates that the first control signaling comprises the second field.

In one embodiment, the second field comprised in the first control signaling is used to indicate whether the first control signaling belongs to the target signaling subset.

In one embodiment, when the value of the second field comprised in the first control signaling is equal to a first target value, the first control signaling does not belong to the target signaling subset; when the value of the second field comprised in the first control signaling is unequal to a first target value, the first control signaling belongs to the target signaling subset; the first target value is a non-negative integer.

In one embodiment, when the value of the second field comprised in the first control signaling is equal to a first target value, the first control signaling belongs to the target signaling subset; when the value of the second field comprised in the first control signaling is unequal to a first target value, the first control signaling does not belong to the target signaling subset; the first target value is a non-negative integer.

In one embodiment, the first target value is 0.

In one embodiment, the first target value is 1.

In one embodiment, the first target value is a value represented by all-zero bits or a value represented by all-one bits.

In one embodiment, the second field comprises only 1 bit, and the first target value is 0.

In one embodiment, the second field comprises only 1 bit, and the first target value is 1.

In one embodiment, the second field comprises 2 bits, and the first target value is 00.

In one embodiment, the second field comprises 2 bits, and the first target value is 11.

In one embodiment, the second field comprises 2 bits, and the first target value is 10.

In one embodiment, the second field comprises 2 bits, and the first target value is 01.

In one embodiment, the second field comprises 3 bits, and the first target value is 000.

In one embodiment, the second field comprises 3 bits, and the first target value is 111.

In one embodiment, the second field comprises multiple bits.

In one embodiment, the second field is a field used to indicate whether the HARQ-ACK feedback is enabled or disabled.

In one embodiment, the statement of the first information block being used to determine whether the first control signaling belongs to the target signaling subset includes the following meaning: {the first control signaling comprises P fields, P being a positive integer, and the first information block is used to determine that the P fields comprised in the first control signaling are used to determine whether the first control signaling belongs to the target signaling subset; a target value group comprises P target values; when values of the P fields comprised in the first control signaling are respectively equal to the P target values in the target value group, the first control signaling does not belong to the target signaling subset; otherwise, the first control signaling belongs to the target signaling subset}.

In one embodiment, the statement of the first information block being used to determine whether the first control signaling belongs to the target signaling subset includes the following meaning: {the first control signaling comprises P fields, P being a positive integer, and the first information block is used to determine that the P fields comprised in the first control signaling are used to determine whether the first control signaling belongs to the target signaling subset; a target value group comprises P target values; when values of the P fields comprised in the first control signaling are respectively equal to the P target values in the target value group, the first control signaling belongs to the target signaling subset; otherwise, the first control signaling does not belong to the target signaling subset}.

In one embodiment, the first control signaling comprises P fields, P being a positive integer, and the first information block is used to determine that the P fields comprised in the first control signaling are used to determine whether the first control signaling belongs to the target signaling subset; a target value group comprises P target values; when values of the P fields comprised in the first control signaling are respectively equal to the P target values in the target value group, the first control signaling does not belong to the target signaling subset; otherwise, the first control signaling belongs to the target signaling subset.

In one embodiment, the first control signaling comprises P fields, P being a positive integer, and the first information block is used to determine that the P fields comprised in the first control signaling are used to determine whether the first control signaling belongs to the target signaling subset; a target value group comprises P target values; when values of the P fields comprised in the first control signaling are respectively equal to the P target values in the target value group, the first control signaling belongs to the target signaling subset; otherwise, the first control signaling does not belong to the target signaling subset.

In one embodiment, the first information block configures that the P fields comprised in the first control signaling are used to determine whether the first control signaling belongs to the target signaling subset.

In one embodiment, the first information block indicates that the P fields comprised in the first control signaling are used to determine whether the first control signaling belongs to the target signaling subset.

In one embodiment, the first information block explicitly indicates that the P fields comprised in the first control signaling are used to determine whether the first control signaling belongs to the target signaling subset.

In one embodiment, the first information block implicitly indicates that the P fields comprised in the first control signaling are used to determine whether the first control signaling belongs to the target signaling subset.

In one embodiment, P is equal to 1.

In one embodiment, P is equal to 2.

In one embodiment, P is equal to 3.

In one embodiment, P is no greater than 16.

In one embodiment, the P fields do not include the first field.

In one embodiment, the first field does not belong to the P fields.

In one embodiment, one of the P fields is a PDSCH-to-HARQ_feedback timing indicator field.

In one embodiment, one of the P fields is a PUCCH resource indicator field.

In one embodiment, one of the P fields is a TPC command for scheduled PUCCH field.

In one embodiment, one of the P fields comprises only 1 bit.

In one embodiment, one of the P fields comprises multiple bits.

In one embodiment, one of the P fields comprises 2 bits.

In one embodiment, one of the P fields comprises 3 bits.

In one embodiment, one of the P fields comprises 4 bits.

In one embodiment, one of the P target values in the target value group is 0.

In one embodiment, one of the P target values in the target value group is 00.

In one embodiment, one of the P target values in the target value group is 000.

In one embodiment, one of the P target values in the target value group is 0000.

In one embodiment, one of the P target values in the target value group is 1.

In one embodiment, one of the P target values in the target value group is 11.

In one embodiment, one of the P target values in the target value group is 111.

In one embodiment, one of the P target values in the target value group is 1111.

In one embodiment, any of the P target values in the target value group is a value represented by all-zero bits or a value represented by all-one bits.

In one embodiment, the P target values in the target value group are configurable.

In one embodiment, the P target values in the target value group are default.

In one embodiment, the P target values in the target value group are pre-defined.

In one embodiment, that the values of the P fields comprised in the first control signaling are respectively equal to the P target values in the target value group indicates: HARQ-ACK feedback disabling.

In one embodiment, that the values of the P fields comprised in the first control signaling are respectively equal to the P target values in the target value group indicates: HARQ-ACK feedback enabling.

In one embodiment, each control signaling in the target signaling subset is a control signaling that indicates HARQ-ACK feedback enabling; when the first signaling set comprises at least one control signaling other than the target signaling subset: each control signaling other than the target signaling subset in the first signaling set is a control signaling that indicates HARQ-ACK feedback disabling.

In one embodiment, each control signaling in the target signaling subset is a control signaling that indicates enabling HARQ-ACK feedback; when the first signaling set comprises at least one control signaling other than the target signaling subset: each control signaling other than the target signaling subset in the first signaling set is a control signaling that indicates disabling HARQ-ACK feedback.

In one embodiment, at least one control signaling in the first signaling set indicates HARQ-ACK feedback enabling.

In one embodiment, each control signaling in the target signaling subset is a control signaling indicating HARQ-ACK feedback enabling.

In one embodiment, HARQ process(es) indicated by at least one control signaling in the first signaling set is(are) HARQ-ACK feedback enabled HARQ process(es).

In one embodiment, the first control signaling indicates a resource occupied by the first PUCCH.

In one embodiment, a PUCCH resource indicator field comprised in the first control signaling is used to indicate a resource occupied by the first PUCCH.

In one embodiment, the first control signaling indicates a slot to which the first PUCCH belongs in time domain.

In one embodiment, a PDSCH-to-HARQ_feedback timing indicator field comprised in the first control signaling is used to indicate a slot to which the first PUCCH belongs in time domain.

In one embodiment, the first node transmits the first PUCCH with the first transmission power only if the value of the first field in the first control signaling is not equal to a second target value or if at least one control signaling in the first signaling set indicates HARQ process(es) of the second type in the present application; the second target value is a non-negative integer.

In one sub-embodiment of the above embodiment, the first node does not transmit a PUCCH carrying corresponding HARQ-ACK bits when the value of the first field in the first control signaling is equal to the second target value and all control signalings in the first signaling set indicate the HARQ processes of the first type in the present application.

In one embodiment, the first node transmits the first PUCCH with the first transmission power only if the value of the first field in the first control signaling is not equal to a second target value or if at least one control signaling in the first signaling set indicates HARQ-ACK feedback enabling; the second target value is a non-negative integer.

In one sub-embodiment of the above embodiment, the first node does not transmit a PUCCH carrying corresponding HARQ-ACK bits when the value of the first field in the first control signaling is equal to the second target value and all control signalings in the first signaling set indicate HARQ-ACK feedback disabling.

In one embodiment, the second target value is equal to 0.

In one embodiment, the second target value is equal to 1.

In one embodiment, the second target value is equal to 2.

In one embodiment, the second target value is equal to 3.

In one embodiment, the second target value is equal to 4.

In one embodiment, the second target value is default.

In one embodiment, the second target value is configurable.

In one embodiment, the number of control signaling(s) comprised in the target signaling subset is a total number of control signaling(s) comprised in the target signaling subset.

In one embodiment, the target signaling subset comprises control signaling(s) for at least one serving cell, and the number of control signaling(s) in the target signaling subset is: the total number of all control signaling(s) belonging to the target signaling subset that is(are) for any of the at least one serving cell.

In one embodiment, the first reference HARQ-ACK bit number depends on at least the value of the first field in the first control signaling.

In one embodiment, the statement of the first information block being used to determine whether the first control signaling belongs to the target signaling subset includes:

the first information block is used to determine which HARQ processes in a first HARQ process set are HARQ processes of a first type; the first control signaling is a last of control signalings in the first signaling set; control signalings in the target signaling subset are all control signalings of a first type, control signaling(s) of the first type is(are) related to HARQ process(es) of the first type.

In one embodiment, the statement "the first information block being used to determine whether the first control signaling belongs to the target signaling subset" and the statement that "the first information block is used to determine which HARQ processes in a first HARQ process set are HARQ processes of a first type; the first control signaling is a last of control signalings in the first signaling set; control signalings in the target signaling subset are all control signalings of a first type, control signaling(s) of the first type is(are) related to HARQ process(es) of the first type" are equivalent or can be mutually replaced.

In one embodiment, when the first control signaling is a control signaling of the first type, the target signaling subset comprises the first control signaling.

In one embodiment, when the first control signaling is not a control signaling of the first type, the target signaling subset does not comprise the first control signaling.

In one embodiment, all of control signalings of the first types in the first signaling set constitute the target signaling subset.

In one embodiment, the statement that control signaling(s) of the first type is(are) related to HARQ process(es) of the first type comprises: a given control signaling is a control signaling in the first signaling set, whether the given control signaling is a control signaling of the first type is related to a HARQ process indicated by the given control signaling.

In one embodiment, the statement that control signaling(s) of the first type is(are) related to HARQ process(es) of the first type comprises: a given control signaling is a control signaling in the first signaling set, whether the given control signaling is a control signaling of the first type is dependent on a HARQ process indicated by the given control signaling.

In one embodiment, the statement that control signaling(s) of the first type is(are) related to HARQ process(es) of the first type comprises: a given control signaling is a control signaling in the first signaling set, when the given control signaling schedules at least one PDSCH, whether the given control signaling is a control signaling of the first type is related to whether a HARQ process indicated by the given control signaling is a HARQ process of the first type.

In one embodiment, the statement that control signaling(s) of the first type is(are) related to HARQ process(es) of the first type comprises: a given control signaling is a control signaling in the first signaling set, when the given control signaling schedules at least one PDSCH, whether the given control signaling is a control signaling of the first type is dependent on whether a HARQ process indicated by the given control signaling is a HARQ process of the first type.

In one embodiment, the given control signaling schedules at least one PDSCH; when at least one HARQ process indicated by the given control signaling is a HARQ process of the first type, the given control signaling is a control signaling of the first type; when none of HARQ process(es) indicated by the given control signaling is a HARQ process of the first type, the given control signaling is not a control signaling of the first type.

In one embodiment, the given control signaling schedules at least one PDSCH; when at least one HARQ process indicated by the given control signaling is a HARQ process of the first type, the given control signaling is not a control signaling of the first type; when none of HARQ process(es) indicated by the given control signaling is a HARQ process of the first type, the given control signaling is a control signaling of the first type.

In one embodiment, the given control signaling schedules at least one PDSCH; when at least one HARQ process indicated by the given control signaling is not a HARQ process of the first type, the given control signaling is a control signaling of the first type; when each of HARQ process(es) indicated by the given control signaling is a HARQ process of the first type, the given control signaling is not a control signaling of the first type.

In one embodiment, the given control signaling schedules at least one PDSCH; when at least one HARQ process indicated by the given control signaling is not a HARQ process of the first type, the given control signaling is not a control signaling of the first type; when each of HARQ process(es) indicated by the given control signaling is a HARQ process of the first type, the given control signaling is a control signaling of the first type.

In one embodiment, the statement that control signaling(s) of the first type is(are) related to HARQ process(es) of the first type comprises: a given control signaling is a control signaling in the first signaling set, when the given control signaling schedules at least one PDSCH, whether the given control signaling is a control signaling of the first type is related to whether a HARQ process corresponding to TBs in a PDSCH scheduled by the given control signaling is a HARQ process of the first type.

In one embodiment, the statement that control signaling(s) of the first type is(are) related to HARQ process(es) of the first type comprises: a given control signaling is a control signaling in the first signaling set, when the given control signaling schedules at least one PDSCH, whether the given control signaling is a control signaling of the first type is dependent on whether a HARQ process corresponding to TBs in a PDSCH scheduled by the given control signaling is a HARQ process of the first type.

In one embodiment, when the given control signaling does not schedule a PDSCH, the given control signaling is a control signaling of the first type.

In one embodiment, when the given control signaling does not schedule a PDSCH, the given control signaling is not a control signaling of the first type.

In one embodiment, the first signaling set comprises at least one control signaling that is not a control signaling of the first type.

In one embodiment, each control signaling in the first signaling set is a control signaling of the first type.

In one embodiment, the statement that control signaling(s) of the first type is(are) related to HARQ process(es) of the first type comprises: one control signaling that schedules a PDSCH only providing TB(s) for HARQ process(es) of the first type is not a control signaling of the first type.

In one embodiment, the statement that control signaling(s) of the first type is(are) related to HARQ process(es) of the first type comprises: a control signaling of the first type scheduling a PDSCH providing at least one transport block (TB) for HARQ process(es) of a second type, or having associated HARQ-ACK information without scheduling a PDSCH.

In one embodiment, one control signaling that schedules a PDSCH only providing TB(s) for HARQ process(es) of the first type is not a control signaling of the first type.

In one embodiment, any control signaling that schedules a PDSCH only providing TB(s) for HARQ process(es) of the first type is not a control signaling of the first type.

In one embodiment, a control signaling of the first type: which schedules a PDSCH that provides at least one TB for a HARQ process of a second type or, has associated HARQ-ACK information without scheduling a PDSCH.

In one embodiment, a HARQ process of the first type is: a HARQ process with disabled HARQ-ACK information.

In one embodiment, a HARQ process of the second type is: a HARQ process with enabled HARQ-ACK information.

In one embodiment, a HARQ process of the second type is: a HARQ process with disabled HARQ-ACK information.

In one embodiment, a HARQ process of the first type is: a HARQ process with enabled HARQ-ACK information.

In one embodiment, the statement that control signaling(s) of the first type is(are) related to HARQ process(es) of the first type comprises: a control signaling of the first type schedules a PDSCH only providing a TB for a HARQ process of the first type.

In one embodiment, the statement of the first information block being used to determine whether the first control signaling belongs to the target signaling subset includes:

the first information block is used to determine which HARQ processes in a first HARQ process set are HARQ processes of a first type; the first control signaling is a last control signaling of a first type in the first signaling set; control signalings in the target signaling subset are all control signalings of a first type, control signaling(s) of the first type is(are) related to HARQ process(es) of the first type.

In one embodiment, the statement "the first information block being used to determine whether the first control signaling belongs to the target signaling subset" and the statement that "the first information block is used to determine which HARQ processes in a first HARQ process set are HARQ processes of a first type; the first control signaling is a last of control signalings in the first signaling set; control signalings in the target signaling subset are all control signalings of a first type, control signaling(s) of the first type is(are) related to HARQ process(es) of the first type" are equivalent or can be mutually replaced.

In one embodiment, the phrase "last" includes: being latest in time domain.

In one embodiment, the phrase "last" includes: being last detected.

In one embodiment, the phrase "last" includes: being latest in time-frequency domain.

In one embodiment, the phrase "last" includes: being latest in the order of control signaling receptions.

In one embodiment, the phrase "last" includes: being last to be successfully decoded.

In one embodiment, the first information block is used to determine which HARQ processes in a first HARQ process set are HARQ processes of a first type.

In one embodiment, the first control signaling is used to indicate a target HARQ process, the target HARQ process being a HARQ process in the first HARQ process set; when the target HARQ process is a HARQ process of the first type, the first control signaling belongs to the target signaling subset; when the target HARQ process is not a HARQ process of the first type, the first control signaling does not belong to the target signaling subset.

In one embodiment, the first control signaling is used to indicate a target HARQ process, the target HARQ process being a HARQ process in the first HARQ process set; when the target HARQ process is a HARQ process of the first type, the first control signaling does not belong to the target signaling subset; when the target HARQ process is not a HARQ process of the first type, the first control signaling belongs to the target signaling subset.

In one embodiment, the statement of the first information block being used to determine whether the first control signaling belongs to the target signaling subset includes:

a same RNTI is applied to all control signalings in the first signaling set; the first control signaling is a last of control signalings in the first signaling set; control signalings in the target signaling subset are all control signalings of a second type; the control signalings of the second type are related to whether HARQ-ACK information is provided; for the same RNTI, the first information block indicates: whether HARQ feedback is provided is indicated by the DCI.

In one embodiment, when the first control signaling is a control signaling of the second type, the target signaling subset comprises the first control signaling.

In one embodiment, when the first control signaling is not a control signaling of the second type, the target signaling subset does not comprise the first control signaling.

In one embodiment, the statement providing HARQ-ACK information includes: providing HARQ-ACK information by the first node.

In one embodiment, the statement providing HARQ-ACK information includes: generating HARQ-ACK information by the first node.

In one embodiment, the first signaling set comprises at least one control signaling that is not a control signaling of the second type.

In one embodiment, each control signaling in the first signaling set is a control signaling of the second type.

In one embodiment, when a Cyclic redundancy check (CRC) of one control signaling is scrambled by an RNTI, the control signaling applies the RNTI.

In one embodiment, a control signaling that applies one RNTI refers to: the control signaling with the RNTI.

In one embodiment, the same RNTI is a G-RNTI, or a G-CS-RNTI.

In one embodiment, the same RNTI is an RNTI for multicast.

In one embodiment, for the same RNTI, the first node is configured with only one serving cell for receiving multicast PDSCH.

In one embodiment, for the same RNTI, the first node is configured with multiple serving cells for receiving multicast PDSCH.

In one embodiment, each control signaling in the first signaling set is a multicast DCI format.

In one embodiment, each control signaling in the first signaling set is detected in at least one PDCCH monitoring occasion.

In one embodiment, each control signaling in the first signaling set is for a serving cell and detected in at least one PDCCH monitoring occasion.

In one embodiment, the same RNTI is applicable to the control signalings of the second type.

In one embodiment, the statement that the control signalings of the second type are related to whether HARQ-ACK information is provided includes: a given control signaling is a control signaling in the first signaling set, whether the given control signaling is a control signaling of the second type is related to whether HARQ-ACK information is provided.

In one embodiment, the statement that the control signalings of the second type are related to whether HARQ-ACK information is provided includes: a given control signaling is a control signaling in the first signaling set, whether the given control signaling is a control signaling of the second type is related to the provision of HARQ-ACK information as determined based on indication of the given control signaling.

In one embodiment, the statement that the control signalings of the second type are related to whether HARQ-ACK information is provided includes: a given control signaling is a control signaling in the first signaling set, whether the given control signaling is a control signaling of the second type is dependent on the provision of HARQ-ACK information as determined based on indication of the given control signaling.

In one embodiment, the statement that the control signalings of the second type are related to whether HARQ-ACK information is provided includes: a given control signaling is a control signaling in the first signaling set, when the given control signaling schedules at least one PDSCH, whether the given control signaling is a control signaling of the second type is related to whether HARQ-ACK information is provided.

In one embodiment, the statement that the control signalings of the second type are related to whether HARQ-ACK information is provided includes: a given control signaling is a control signaling in the first signaling set, when the given control signaling schedules at least one PDSCH, whether the given control signaling is a control signaling of the second type is related to the provision of HARQ-ACK information as determined based on indication of the given control signaling.

In one embodiment, the statement that the control signalings of the second type are related to whether HARQ-ACK information is provided includes: a given control signaling is a control signaling in the first signaling set, when the given control signaling schedules at least one PDSCH, whether the given control signaling is a control signaling of the second type is dependent on the provision of HARQ-ACK information as determined based on indication of the given control signaling.

In one embodiment, a given control signaling is any control signaling in the first signaling set.

In one embodiment, when the given control signaling does not schedule a PDSCH, the given control signaling is a control signaling of the second type.

In one embodiment, when the given control signaling does not schedule a PDSCH, the given control signaling is not a control signaling of the second type.

In one embodiment, all control signalings of the second type in the first signaling set constitute the target signaling subset.

In one embodiment, the statement that the control signalings of the second type are related to whether HARQ-ACK information is provided includes: one control signaling applying the same RNTI and indicating that HARQ-ACK information is not provided is not a control signaling of the second type.

In one embodiment, any control signaling applying the same RNTI and indicating that HARQ-ACK information is not provided is not a control signaling of the second type.

In one embodiment, the statement that the control signalings of the second type are related to whether HARQ-ACK information is provided includes: one control signaling of the second type applying the same RNTI and indicating the provision of HARQ-ACK information.

In one embodiment, one control signaling that applies the same RNTI and indicates that HARQ-ACK information is not provided is not a control signaling of the second type.

In one embodiment, one control signaling of the second type applies the same RNTI and indicates the provision of HARQ-ACK information.

In one embodiment, the statement that the control signalings of the second type are related to whether HARQ-ACK information is provided includes: one control signaling applying the same RNTI and indicating that HARQ-ACK information for PDSCH is not provided is not a control signaling of the second type.

In one embodiment, any control signaling applying the same RNTI and indicating that HARQ-ACK information for PDSCH is not provided is not a control signaling of the second type.

In one embodiment, the statement that the control signalings of the second type are related to whether HARQ-ACK information is provided includes: one control signaling of the second type applying the same RNTI and indicating the provision of HARQ-ACK information for PDSCH.

In one embodiment, the statement that the control signalings of the second type are related to whether HARQ-ACK information is provided includes: one control signaling of the second type: applying the same RNTI and indicating the provision of HARQ-ACK information for PDSCH, or, applying the same RNTI, and having associated HARQ-ACK information without scheduling PDSCH.

In one embodiment, a control signaling applying the same RNTI and indicating that HARQ-ACK information for a PDSCH is not provided is not a control signaling of the second type.

In one embodiment, a control signaling of the second type applies the same RNTI and indicates the provision of HARQ-ACK information for a PDSCH.

In one embodiment, a control signaling of the second type applies the same RNTI and has associated HARQ-ACK information without scheduling a PDSCH.

In one embodiment, the statement that the control signalings of the second type are related to whether HARQ-ACK information is provided includes: one control signaling of the second type applying the same RNTI and indicating that HARQ-ACK information is not provided.

In one embodiment, the statement of the first information block being used to determine whether the first control signaling belongs to the target signaling subset includes:

the same RNTI is applied to all control signalings in the first signaling set; the first control signaling is a last control signaling of the second type in the first signaling set; the control signalings in the target signaling subset are all control signalings of the second type; the control signalings of the second type are related to whether HARQ-ACK information is provided; for the same RNTI, the first information block indicates that: whether HARQ feedback is provided is indicated by a DCI.

In one embodiment, the statement "the first information block being used to determine whether the first control signaling belongs to the target signaling subset" and the statement that "a same RNTI is applied to all control signalings in the first signaling set; the first control signaling is a last of control signalings in the first signaling set; control signalings in the target signaling subset are all control signalings of the second type; the control signalings of the second type are related to whether HARQ-ACK information is provided; for the same RNTI, the first information block indicates: whether HARQ feedback is provided is indicated by the DCI" are equivalent or can be mutually replaced.

In one embodiment, the statement "the first information block being used to determine whether the first control signaling belongs to the target signaling subset" and the statement that "a same RNTI is applied to all control signalings in the first signaling set; the first control signaling is a last control signaling of the second type in the first signaling set; control signalings in the target signaling subset are all control signalings of the second type; the control signalings of the second type are related to whether HARQ-ACK information is provided; for the same RNTI, the first information block indicates: whether HARQ feedback is provided is indicated by the DCI" are equivalent or can be mutually replaced.

In one embodiment, the first information block is a HARQ-feedbackEnabling-disablingperHARQprocess.

In one embodiment, the first information block is a downlinkHARQ-FeedbackDisabled.

In one embodiment, the first information block is a harq-FeedbackEnablerMulticast.

In one embodiment, a name of the first information block includes Feedback.

In one embodiment, a name of the first information block includes FeedbackDisabl.

In one embodiment, a name of the first information block includes feedbackEnabl.

In one embodiment, the first node is configured with only one serving cell for receiving a multicast PDSCH.

**Embodiment 2**

Embodiment 2 illustrates a schematic diagram of a network architecture according to the present application, as shown in FIG. 2.

FIG. 2 is a diagram illustrating a network architecture 200 of 5G NR, Long-Term Evolution (LTE) and Long-Term Evolution Advanced (LTE-A) systems. The 5G NR or LTE network architecture 200 may be called an Evolved Packet System (EPS) 200 or other suitable terminology. The EPS 200 may comprise one or more UEs 201, an NG-RAN 202, a Evolved Packet Core/5G-Core Network (EPC/5G-CN) 210, a Home Subscriber Server (HSS) 220 and an Internet Service 230. The EPS 200 may be interconnected with other access networks. For simple description, the entities/interfaces are not shown. As shown in FIG. 2, the EPS 200 provides packet switching services. Those skilled in the art will find it easy to understand that various concepts presented throughout the present application can be extended to networks providing circuit switching services or other cellular networks. The NG-RAN 202 comprises an NR node B (gNB) 203 and other gNBs 204. The gNB 203 provides UE 201 oriented user plane and control plane terminations. The gNB 203 may be connected to other gNBs 204 via an Xn interface (for example, backhaul). The gNB 203 may be called a base station, a base transceiver station, a radio base station, a radio transceiver, a transceiver function, a Base Service Set (BSS), an Extended Service Set (ESS), a Transmitter Receiver Point (TRP) or some other applicable terms. The gNB 203 provides an access point of the EPC/5G-CN 210 for the UE 201. Examples of UE 201 include cellular phones, smart phones, Session Initiation Protocol (SIP) phones, laptop computers, Personal Digital Assistant (PDA), Satellite Radios, non-terrestrial base station communications, satellite mobile communications, Global Positioning Systems (GPSs), multimedia devices, video devices, digital audio players (for example, MP3 players), cameras, games consoles, unmanned aerial vehicles, air vehicles, narrow-band physical network equipment, machine-type communication equipment, land vehicles, automobiles, wearable equipment, or any other devices having similar functions. Those skilled in the art also can call the UE 201 a mobile station, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user proxy, a mobile client, a client or some other appropriate terms. The gNB 203 is connected to the EPC/5G-CN 210 via an S1/NG interface. The EPC/5G-CN 210 comprises a Mobility Management Entity (MME)/ Authentication Management Field(AMF)/User Plane Function (UPF) 211, other MMEs/AMFs/UPFs 214, a Service Gateway (S-GW) 212 and a Packet Date Network Gateway (P-GW) 213. The MME/AMF/UPF 211 is a control node for processing a signaling between the UE 201 and the EPC/5G-CN 210. Generally, the MME/AMF/UPF 211 provides bearer and connection management. All user Internet Protocol (IP) packets are transmitted through the S-GW 212. The S-GW 212 is connected to the P-GW 213. The P-GW 213 provides UE IP address allocation and other functions. The P-GW 213 is connected to the Internet Service 230. The Internet Service 230 comprises IP services corresponding to operators, specifically including Internet, Intranet, IP Multimedia Subsystem (IMS) and Packet Switching Streaming (PSS) services.

In one embodiment, the UE 201 corresponds to the first node in the present application.

In one embodiment, the UE 201 corresponds to the second node in the present application.

In one embodiment, the gNB 203 corresponds to the first node in the present application.

In one embodiment, the gNB203 corresponds to the second node in the present application.

In one embodiment, the UE 201 corresponds to the first node in the present application, and the gNB203 corresponds to the second node in the present application.

In one embodiment, the gNB 203 is a Macro-Cellular base station.

In one embodiment, the gNB203 is a Micro Cell base station.

In one embodiment, the gNB 203 is a PicoCell base station.

In one embodiment, the gNB203 is a Femtocell.

In one embodiment, the gNB203 is a base station supporting large time-delay difference.

In one embodiment, the gNB203 is a flight platform.

In one embodiment, the gNB203 is satellite equipment.

In one embodiment, the first node and the second node in the present application both correspond to the UE 201, for instance, V2X communications is performed between the first node and the second node.

**Embodiment 3**

Embodiment 3 illustrates a schematic diagram of a radio protocol architecture of a user plane and a control plane according to the present application, as shown in FIG. 3. FIG. 3 is a schematic diagram illustrating an embodiment of a radio protocol architecture of a user plane 350 and a control plane 300. In FIG. 3, the radio protocol architecture for a control plane 300 between a first communication node (UE, gNB or, RSU in V2X) and a second communication node (gNB, UE, or RSU in V2X), or between two UEs, is represented by three layers, which are L1, L2 and L3. The layer 1 (L1) is the lowest layer which performs signal processing functions of various PHY layers. The L1 is called PHY 301 in the present application. The layer 2 (L2) 305 is above the PHY 301, and is in charge of the link between a first communication node and a second communication node as well as between two UEs via the PHY 301. The L2 305 comprises a Medium Access Control (MAC) sublayer 302, a Radio Link Control (RLC) sublayer 303 and a Packet Data Convergence Protocol (PDCP) sublayer 304. All these sublayers terminate at the second communication nodes. The PDCP sublayer 304 provides multiplexing among variable radio bearers and logical channels. The PDCP sublayer 304 provides security by encrypting packets and also support for inter-cell handover of the first communication node between second communication nodes. The RLC sublayer 303 provides segmentation and reassembling of a higher-layer packet, retransmission of a lost packet, and reordering of a packet so as to compensate the disordered receiving caused by Hybrid Automatic Repeat reQuest (HARQ). The MAC sublayer 302 provides multiplexing between a logical channel and a transport channel. The MAC sublayer 302 is also responsible for allocating between first communication nodes various radio resources (i.e., resource block) in a cell. The MAC sublayer 302 is also in charge of HARQ operation. In the control plane 300, The RRC sublayer 306 in the L3 layer is responsible for acquiring radio resources (i.e., radio bearer) and configuring the lower layer using an RRC signaling between the second communication node and the first communication node. The radio protocol architecture in the user plane 350 comprises the L1 layer and the L2 layer. In the user plane 350, the radio protocol architecture used for the first communication node and the second communication node in a PHY layer 351, a PDCP sublayer 354 of the L2 layer 355, an RLC sublayer 353 of the L2 layer 355 and a MAC sublayer 352 of the L2 layer 355 is almost the same as the radio protocol architecture used for corresponding layers and sublayers in the control plane 300, but the PDCP sublayer 354 also provides header compression used for higher-layer packet to reduce radio transmission overhead. The L2 layer 355 in the user plane 350 also comprises a Service Data Adaptation Protocol (SDAP) sublayer 356, which is in charge of the mapping between QoS streams and a Data Radio Bearer (DRB), so as to support diversified traffics. Although not described in FIG. 3, the first communication node may comprise several higher layers above the L2 355, such as a network layer (i.e., IP layer) terminated at a P-GW 213 of the network side and an application layer terminated at the other side of the connection (i.e., a peer UE, a server, etc.).

In one embodiment, the radio protocol architecture in FIG. 3 is applicable to the first node in the present application.

In one embodiment, the radio protocol architecture in FIG. 3 is applicable to the second node in the present application.

In one embodiment, the first information block in the present application is generated by the RRC sublayer 306.

In one embodiment, the first information block in the present application is generated by the MAC sublayer 302.

In one embodiment, the first information block in the present application is generated by the MAC sublayer 352.

In one embodiment, the first information block in the present application is generated by the PHY 301.

In one embodiment, the first information block in the present application is generated by the PHY 351.

In one embodiment, a control signaling in the first signaling set in the present application is generated by the RRC sublayer 306.

In one embodiment, a control signaling in the first signaling set in the present application is generated by the MAC sublayer 302.

In one embodiment, a control signaling in the first signaling set in the present application is generated by the MAC sublayer 352.

In one embodiment, a control signaling in the first signaling set in the present application is generated by the PHY 301.

In one embodiment, a control signaling in the first signaling set in the present application is generated by the PHY 351.

In one embodiment, the first PUCCH in the present application is generated by the PHY 301.

In one embodiment, the first PUCCH in the present application is generated by the PHY 351.

In one embodiment, the first PDSCH group in the present application is generated by the PHY 301.

In one embodiment, the first PDSCH group in the present application is generated by the PHY 351.

**Embodiment 4**

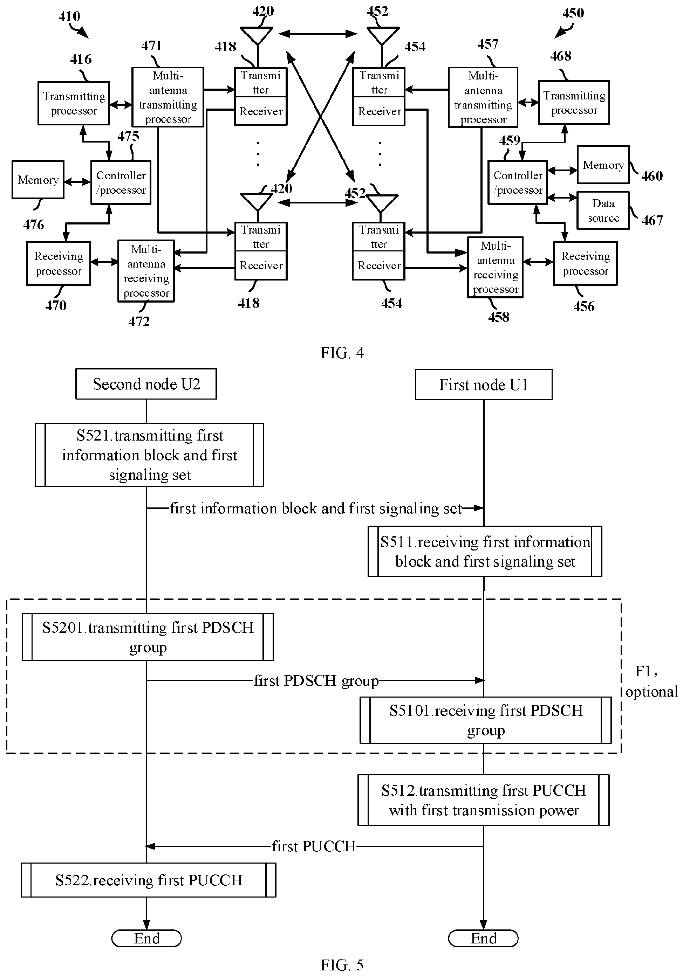

Embodiment 4 illustrates a schematic diagram of a first communication device and a second communication device according to the present application, as shown in FIG. 4. FIG. 4 is a block diagram of a first communication device 410 and a second communication device 450 in communication with each other in an access network.

The first communication device 410 comprises a controller/processor 475, a memory 476, a receiving processor 470, a transmitting processor 416, a multi-antenna receiving processor 472, a multi-antenna transmitting processor 471, a transmitter/receiver 418 and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitter/receiver 454 and an antenna 452.

In a transmission from the first communication device 410 to the second communication device 450, at the first communication device 410, a higher layer packet from a core network is provided to the controller/processor 475. The controller/processor 475 provides functions of the L2 layer. In the transmission from the first communication device 410 to the second communication device 450, the controller/processor 475 provides header compression, encryption, packet segmentation and reordering, and multiplexing between a logical channel and a transport channel, and radio resource allocation of the second communication device 450 based on various priorities. The controller/processor 475 is also responsible for a retransmission of a lost packet, and a signaling to the second communication device 450. The transmitting processor 416 and the multi-antenna transmitting processor 471 perform various signal processing functions used for the L1 layer (i.e., PHY). The transmitting processor 416 performs coding and interleaving so as to ensure a Forward Error Correction (FEC) at the second communication device 450 side and the mapping to signal clusters corresponding to each modulation scheme (i.e., BPSK, QPSK, M-PSK, and M-QAM, etc.). The multi-antenna transmitting processor 471 performs digital spatial precoding, which includes precoding based on codebook and precoding based on non-codebook, and beamforming processing on encoded and modulated signals to generate one or more spatial streams. The transmitting processor 416 then maps each spatial stream into a subcarrier. The mapped symbols are multiplexed with a reference signal (i.e., pilot frequency) in time domain and/or frequency domain, and then they are assembled through Inverse Fast Fourier Transform (IFFT) to generate a physical channel carrying time-domain multicarrier symbol streams. After that the multi-antenna transmitting processor 471 performs transmission analog precoding/beamforming on the time-domain multicarrier symbol streams. Each transmitter 418 converts a baseband multicarrier symbol stream provided by the multi-antenna transmitting processor 471 into a radio frequency (RF) stream, which is later provided to different antennas 420.

In a transmission from the first communication device 410 to the second communication device 450, at the second communication device 450, each receiver 454 receives a signal via a corresponding antenna 452. Each receiver 454 recovers information modulated to the RF carrier, and converts the radio frequency stream into a baseband multicarrier symbol stream to be provided to the receiving processor 456. The receiving processor 456 and the multi-antenna receiving processor 458 perform signal processing functions of the L1 layer. The multi-antenna receiving processor 458 performs reception analog precoding/beamforming on a baseband multicarrier symbol stream provided by the receiver 454. The receiving processor 456 converts the processed baseband multicarrier symbol stream from time domain into frequency domain using FFT. In frequency domain, a physical layer data signal and a reference signal are de-multiplexed by the receiving processor 456, wherein the reference signal is used for channel estimation, while the data signal is subjected to multi-antenna detection in the multi-antenna receiving processor 458 to recover any second communication device 450-targeted spatial stream. Symbols on each spatial stream are demodulated and recovered in the receiving processor 456 to generate a soft decision. Then the receiving processor 456 decodes and de-interleaves the soft decision to recover the higher-layer data and control signal transmitted by the first communication device 410 on the physical channel. Next, the higher-layer data and control signal are provided to the controller/processor 459. The controller/processor 459 provides functions of the L2 layer.

The controller/processor 459 can be associated with a memory 460 that stores program code and data. The memory 460 can be called a computer readable medium. In the transmission from the first communication device 410 to the second communication device 450, the controller/processor 459 provides demultiplexing between a transport channel and a logical channel, packet reassembling, decrypting, header decompression and control signal processing so as to recover a higher-layer packet from the core network. The higher-layer packet is later provided to all protocol layers above the L2 layer. Or various control signals can be provided to the L3 for processing.

In a transmission from the second communication device 450 to the first communication device 410, at the second communication device 450, the data source 467 is configured to provide a higher-layer packet to the controller/processor 459. The data source 467 represents all protocol layers above the L2 layer. Similar to a transmitting function of the first communication device 410 described in the transmission from the first communication node 410 to the second communication node 450, the controller/processor 459 performs header compression, encryption, packet segmentation and reordering, and multiplexing between a logical channel and a transport channel based on radio resource allocation of the first communication device 410 so as to provide the L2 layer functions used for the user plane and the control plane. The controller/processor 459 is also in charge of a retransmission of a lost packet and a signaling to the first communication device 410. The transmitting processor 468 performs modulation and mapping, as well as channel coding, and the multi-antenna transmitting processor 457 performs digital multi-antenna spatial precoding, including precoding based on codebook and precoding based on non-codebook, and beamforming. The transmitting processor 468 then modulates generated spatial streams into multicarrier/single-carrier symbol streams. The modulated symbol streams, after being subjected to analog precoding/beamforming in the multi-antenna transmitting processor 457, are provided from the transmitter 454 to each antenna 452. Each transmitter 454 firstly converts a baseband symbol stream provided by the multi-antenna transmitting processor 457 into a radio frequency symbol stream, and then provides the radio frequency symbol stream to the antenna 452.

In a transmission from the second communication device 450 to the first communication device 410, the function of the first communication device 410 is similar to the receiving function of the second communication device 450 described in the transmission from the first communication device 410 to the second communication device 450. Each receiver 418 receives a radio frequency signal via a corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly provide functions of the L1 layer. The controller/processor 475 provides functions of the L2 layer. The controller/processor 475 can be associated with a memory 476 that stores program code and data. The memory 476 can be called a computer readable medium. In the transmission between the second communication device 450 and the first communication device 410, the controller/processor 475 provides demultiplexing between a transport channel and a logical channel, packet reassembling, decrypting, header decompression, control signal processing so as to recover a higher-layer packet from the second communication device (UE) 450. The higher-layer packet coming from the controller/processor 475 may be provided to the core network.

In one embodiment, the first node in the present application comprises the second communication device 450, and the second node in the present application comprises the first communication device 410.

In one subembodiment, the first node is a UE, and the second node is a UE.

In one subembodiment, the first node is a UE, and the second node is a relay node.

In one subembodiment, the first node is a relay node, and the second node is a UE.

In one subembodiment, the first node is a UE, and the second node is a base station.

In one subembodiment, the first node is a relay node, and the second node is a base station.

In one subembodiment, the second node is a UE, and the first node is a base station.

In one subembodiment, the second node is a relay node, and the first node is a base station.

In one subembodiment, the second communication device 450 comprises: at least one controller/processor; the at least one controller/processor is in charge of HARQ operation.

In one subembodiment, the first communication device 410 comprises: at least one controller/processor; the at least one controller/processor is in charge of HARQ operation.

In one subembodiment, the first communication device 410 comprises: at least one controller/processor; the at least one controller/processor is in charge of error detections using ACK and/or NACK protocols to support HARQ operation.

In one embodiment, the second communication device 450 comprises at least one processor and at least one memory. The at least one memory comprises computer program codes; the at least one memory and the computer program codes are configured to be used in collaboration with the at least one processor. The second communication device 450 at least receives a first information block and a first signaling set, the first signaling set comprising multiple control signalings, and a first control signaling being a control signaling comprised in the first signaling set; and transmits a first PUCCH with a first transmission power, the first PUCCH carrying at least one HARQ-ACK bit; herein, a first reference HARQ-ACK bit number is used to determine the first transmission power, the first reference HARQ-ACK bit number being a positive integer; the first control signaling comprises a first field, a value of the first field comprised in the first control signaling being a positive integer; a first intermediate quantity is used to determine the first reference HARQ-ACK bit number, the first intermediate quantity being linear with the value of the first field comprised in the first control signaling; the first signaling set comprises a target signaling subset, the target signaling subset comprising at least one control signaling, the first intermediate quantity being linear with a number of control signaling(s) comprised in the target signaling subset, the first information block being used to determine whether the first control signaling belongs to the target signaling subset.

In one subembodiment, the second communication device 450 corresponds to the first node in the present application.

In one embodiment, the second communication device 450 comprises a memory that stores computer readable instruction program, the computer readable instruction program generates actions when executed by at least one processor, which include: receiving a first information block and a first signaling set, the first signaling set comprising multiple control signalings, and a first control signaling being a control signaling comprised in the first signaling set; and transmitting a first PUCCH with a first transmission power, the first PUCCH carrying at least one HARQ-ACK bit; herein, a first reference HARQ-ACK bit number is used to determine the first transmission power, the first reference HARQ-ACK bit number being a positive integer; the first control signaling comprises a first field, a value of the first field comprised in the first control signaling being a positive integer; a first intermediate quantity is used to determine the first reference HARQ-ACK bit number, the first intermediate quantity being linear with the value of the first field comprised in the first control signaling; the first signaling set comprises a target signaling subset, the target signaling subset comprising at least one control signaling, the first intermediate quantity being linear with a number of control signaling(s) comprised in the target signaling subset, the first information block being used to determine whether the first control signaling belongs to the target signaling subset.

In one subembodiment, the second communication device 450 corresponds to the first node in the present application.

In one embodiment, the first communication device 410 comprises at least one processor and at least one memory. The at least one memory comprises computer program codes; the at least one memory and the computer program codes are configured to be used in collaboration with the at least one processor. The first communication device 410 at least transmits a first information block and a first signaling set, the first signaling set comprising multiple control signalings, and a first control signaling being a control signaling comprised in the first signaling set; and receives a first PUCCH transmitted with a first transmission power, the first PUCCH carrying at least one HARQ-ACK bit; herein, a first reference HARQ-ACK bit number is used to determine the first transmission power, the first reference HARQ-ACK bit number being a positive integer; the first control signaling comprises a first field, a value of the first field comprised in the first control signaling being a positive integer; a first intermediate quantity is used to determine the first reference HARQ-ACK bit number, the first intermediate quantity being linear with the value of the first field comprised in the first control signaling; the first signaling set comprises a target signaling subset, the target signaling subset comprising at least one control signaling, the first intermediate quantity being linear with a number of control signaling(s) comprised in the target signaling subset, the first information block being used to determine whether the first control signaling belongs to the target signaling subset.

In one subembodiment, the first communication device 410 corresponds to the second node in the present application.

In one embodiment, the first communication device 410 comprises a memory that stores computer readable instruction program, the computer readable instruction program generates actions when executed by at least one processor, which include: transmitting a first information block and a first signaling set, the first signaling set comprising multiple control signalings, and a first control signaling being a control signaling comprised in the first signaling set; and receiving a first PUCCH transmitted with a first transmission power, the first PUCCH carrying at least one HARQ-ACK bit; herein, a first reference HARQ-ACK bit number is used to determine the first transmission power, the first reference HARQ-ACK bit number being a positive integer; the first control signaling comprises a first field, a value of the first field comprised in the first control signaling being a positive integer; a first intermediate quantity is used to determine the first reference HARQ-ACK bit number, the first intermediate quantity being linear with the value of the first field comprised in the first control signaling; the first signaling set comprises a target signaling subset, the target signaling subset comprising at least one control signaling, the first intermediate quantity being linear with a number of control signaling(s) comprised in the target signaling subset, the first information block being used to determine whether the first control signaling belongs to the target signaling subset.

In one subembodiment, the first communication device 410 corresponds to the second node in the present application.

In one embodiment, at least one of the antenna 452, the receiver 454, the multi-antenna receiving processor 458, the receiving processor 456, the controller/processor 459, the memory 460, or the data source 467 is used for receiving the first information block in the present application.

In one embodiment, at least one of the antenna 420, the transmitter 418, the multi-antenna transmitting processor 471, the transmitting processor 416, the controller/processor 475 or the memory 476 is used for transmitting the first information block in the present application.

In one embodiment, at least one of the antenna 452, the receiver 454, the multi-antenna receiving processor 458, the receiving processor 456, the controller/processor 459, the memory 460, or the data source 467 is used for receiving the first signaling set in the present application.

In one embodiment, at least one of the antenna 420, the transmitter 418, the multi-antenna transmitting processor 471, the transmitting processor 416, the controller/processor 475 or the memory 476 is used for transmitting the first signaling set in the present application.

In one embodiment, at least one of the antenna 452, the receiver 454, the multi-antenna receiving processor 458, the receiving processor 456, the controller/processor 459, the memory 460, or the data source 467 is used for receiving the first PDSCH group in the present application.

In one embodiment, at least one of the antenna 420, the transmitter 418, the multi-antenna transmitting processor 471, the transmitting processor 416, the controller/processor 475 or the memory 476 is used for transmitting the first PDSCH group in the present application.

In one embodiment, at least one of the antenna 452, the transmitter 454, the multi-antenna transmitting processor 458, the transmitting processor 468, the controller/processor 459, the memory 460, or the data source 467 is used for transmitting the first PUCCH in the present application with the first transmission power in the present application.

In one embodiment, at least one of the antenna 420, the receiver 418, the multi-antenna receiving processor 472, the receiving processor 470, the controller/processor 475, or the memory 476 is used for receiving the first PUCCH in the present application.

## Embodiment 5

Embodiment 5 illustrates a flowchart of signal transmission according to one embodiment of the present application, as shown in FIG. 5. In FIG. 5, a first node U1 and a second node U2 are in communications via an air interface. In FIG. 5, steps marked by the dotted-line frame box F1 are optional. Particularly, in FIG. 5, the order between the step pair {S521, S511} and the step pair {S5201, S5101} does not imply a particular time sequence.

The first node U1 receives a first information block and a first signaling set in step S511; receives a first PDSCH group in step S5101; and transmits a first PUCCH with a first transmission power in step S512.

The second node U2 transmits the first information block and the first signaling set in step S521; transmits the first PDSCH group in step S5201; and receives the first PUCCH in step S522.

In Embodiment 5, the first signaling set comprises multiple control signalings, and a first control signaling is a control signaling comprised in the first signaling set; the first PUCCH carries at least one HARQ-ACK bit; a first reference HARQ-ACK bit number is used to determine the first transmission power, the first reference HARQ-ACK bit number being a positive integer; the first control signaling comprises a first field, a value of the first field comprised in the first control signaling being a positive integer; a first intermediate quantity is used to determine the first reference HARQ-ACK bit number, the first intermediate quantity being linear with the value of the first field comprised in the first control signaling; the first signaling set comprises a target signaling subset, the target signaling subset comprising at least one control signaling, the first intermediate quantity being linear with a number of control signaling(s) comprised in the target signaling subset, the first information block being used to determine whether the first control signaling belongs to the target signaling subset; the first intermediate quantity is equal to the value of the first field comprised in the first control signaling being subtracted by the number of control signaling(s) comprised in the target signaling subset; the first information block is used to determine which HARQ processes in a first HARQ process set are HARQ processes of a first type, and the first control signaling is used to indicate a target HARQ process, the target HARQ process being a HARQ process in the first HARQ process set; when the target HARQ process is a HARQ process of the first type, the first control signaling does not belong to the target signaling subset; when the target HARQ process is not a HARQ process of the first type, the first control signaling belongs to the target signaling subset; the first PDSCH group comprises at least one PDSCH, and at least one control signaling in the target signaling subset is used to schedule the first PDSCH group, the first PDSCH group being used to determine the first reference HARQ-ACK bit number; the first reference HARQ-ACK bit number is used to determine a target amount of adjustment, and the first transmission power is equal to a smaller value between an upper-limit transmission power and a target transmission power, the target amount of adjustment being used to determine the target transmission power, and the upper-limit transmission power being default or configurable.

In one subembodiment of Embodiment 5, the first control signaling is a last DCI format in the first signaling set.

In one subembodiment of Embodiment 5, all control signalings in the first signaling set are detected in a first resource pool, the first resource pool comprising at least one time interval in time domain; the first control signaling is detected in a last one of the at least one time interval.

In one embodiment, the first node U1 is the first node in the present application.

In one embodiment, the second node U2 is the second node in the present application.

In one embodiment, the first node U1 is a UE.

In one embodiment, the first node U1 is a base station.

In one embodiment, the second node U2 is a base station.

In one embodiment, the second node U2 is a UE.

In one embodiment, an air interface between the second node U2 and the first node U1 is a Uu interface.

In one embodiment, an air interface between the second node U2 and the first node U1 includes a cellular link.

In one embodiment, an air interface between the second node U2 and the first node U1 is a PC5 interface.

In one embodiment, an air interface between the second node U2 and the first node U1 includes a sidelink.

In one embodiment, an air interface between the second node U2 and the first node U1 includes a radio interface between a base station and a UE.

In one embodiment, an air interface between the second node U2 and the first node U1 includes a radio interface between a satellite device and a terrestrial UE.

In one embodiment, an air interface between the second node U2 and the first node U1 includes a radio interface between a UE and another UE.

In one embodiment, in terms of time domain, the first information block is transmitted/received before the first signaling set.

In one embodiment, in terms of time domain, a control signaling in the first signaling set is transmitted/received prior to a PDSCH in the first PDSCH group.

In one embodiment, in terms of time domain, a control signaling in the first signaling set is transmitted/received after a PDSCH in the first PDSCH group.

In one embodiment, in terms of time domain, a control signaling in the first signaling set is transmitted/received between two PDSCHs in the first PDSCH group.

In one embodiment, in terms of time domain, a time-domain resource occupied by a control signaling in the first signaling set has an overlap with a time-domain resource occupied by a PDSCH in the first PDSCH set.

In one embodiment, the first control signaling is a first DCI format in the first signaling set.

In one embodiment, the first control signaling is a last detected DCI format in the first signaling set.

In one embodiment, the first control signaling is an earliest detected DCI format in the first signaling set.

In one embodiment, the first control signaling is a second-to-last DCI format in the first signaling set.

In one embodiment, any PDSCH in the first PDSCH group is used for transmitting at least one TB.

In one embodiment, any Physical Downlink Shared Channel (PDSCH) in the first PDSCH group is used for receiving at least one TB.

In one embodiment, any PDSCH in the first PDSCH group is scheduled by a control signaling in the target signaling subset.

In one embodiment, the first PDSCH group comprises only one PDSCH, and a control signaling in the target signaling subset is used to schedule the only one PDSCH in the first PDSCH group.

In one embodiment, the first PDSCH group comprises multiple PDSCHs, and multiple control signalings in the target signaling subset are used to schedule the multiple PDSCHs in the first PDSCH group respectively.

In one embodiment, the first reference HARQ-ACK bit number is equal to a sum of multiple values, a third intermediate quantity being one of the multiple values, the first PDSCH group being used to determine the third intermediate quantity.

In one embodiment, the first reference HARQ-ACK bit number is equal to a sum of multiple values, a third intermediate quantity being one of the multiple values, a total number of PDSCHs in the first PDSCH group being counted for the third intermediate quantity.

In one embodiment, the first reference HARQ-ACK bit number is equal to a sum of multiple values, a third intermediate quantity being one of the multiple values, a total number of TBs in all PDSCHs in the first PDSCH group being counted for the third intermediate quantity.

In one embodiment, the first reference HARQ-ACK bit number is equal to a sum of multiple values, a third intermediate quantity being one of the multiple values, a total number of CBGs in all PDSCHs in the first PDSCH group being counted for the third intermediate quantity.

In one embodiment, HARQ-ACK bits carried in the first PUCCH include HARQ-ACK bits for the first PDSCH group.

In one embodiment, HARQ-ACK bits carried in the first PUCCH include at least one HARQ-ACK bit for each PDSCH in the first PDSCH group.

In one embodiment, a HARQ process corresponding to any PDSCH in the first PDSCH group is configured as HARQ-ACK feedback enabled.

In one embodiment, a PDSCH in the first PDSCH group is scrambled by one of a C-RNTI, a MCS-C-RNTI or a CS-RNTI.

In one embodiment, a PDSCH in the first PDSCH group is scrambled by a scrambling sequence generated by a G-RNTI.

In one embodiment, a PDSCH in the first PDSCH group is scrambled by a scrambling sequence generated by a G-CS-RNTI.

In one embodiment, the first node also receives at least one PDSCH corresponding to HARQ process(es) configured as HARQ-ACK feedback disabled.

In one embodiment, the first reference HARQ-ACK bit number in the present application is equal to a sum of the second intermediate quantity in the present application and the third intermediate quantity in the present application.

In one embodiment, the first reference HARQ-ACK bit number is used to indicate the target amount of adjustment.

In one embodiment, the first reference HARQ-ACK bit number is used to explicitly indicate the target amount of adjustment.

In one embodiment, the first reference HARQ-ACK bit number is used to implicitly indicate the target amount of adjustment.

In one embodiment, the first reference HARQ-ACK bit number is used to calculate for obtaining the target amount of adjustment.

In one embodiment, the statement in the present application that the first reference HARQ-ACK bit number is used to determine a target amount of adjustment includes that the reference HARQ-ACK bit number is used to determine a first UCI bit number, where the first UCI bit number is used together with a first resource volume for determining a target amount of adjustment, the first resource volume being no greater than a number of REs occupied by the first PUCCH.

In one embodiment, the statement in the present application of the target amount of adjustment being used to determine the target transmission power includes that the target transmission power is a sum of multiple power control components, with the target amount of adjustment being one of the multiple power control components.

In one embodiment, the statement in the present application of the target amount of adjustment being used to determine the target transmission power includes that the target transmission power is linear with the target amount of adjustment.

In one embodiment, the target transmission power is linear with the target amount of adjustment in dB domain.

In one embodiment, the target transmission power is proportional to the target amount of adjustment.

In one embodiment, the first transmission power in the present application is equal to a smaller value between an upper-limit transmission power and a target transmission power, where the target transmission power is a product of multiple power control components, with a target amount of adjustment being one of the multiple power control components.

In one embodiment, a number of UCI bits carried in the first PUCCH belongs to one of K1 number ranges; when the number of the UCI bits carried in the first PUCCH belongs to a n-th number range of the K1 number ranges: a target PUCCH resource set is a n-th PUCCH resource set of K1 PUCCH resource sets, and the first control signaling is used to indicate a PUCCH resource to which a resource occupied by the first PUCCH belongs from the target PUCCH resource set; n is any positive integer no greater than K1; the K1 PUCCH resource sets are configurable, and K1 is a positive integer greater than 1.

In one embodiment, the K1 number ranges do not overlap with each other.

In one embodiment, K1 is equal to 2, the K1 number ranges are [1, 2] and (2, N2] in sequential order; N2 is configured by RRC signaling or, alternatively, N2 is equal to 1706.

In one embodiment, K1 is equal to 3, the K1 number ranges are [1, 2], (2, N2] and (N2, N3] in sequential order; N2 is configured by RRC signaling; N3 is configured by RRC signaling, or, N3 is equal to 1706.

In one embodiment, K1 is equal to 4, the K1 number ranges are [1, 2], (2, N2], (N2, N3] and (N3, 1706] in sequential order; N2 is configured by RRC signaling, and N3 is configured by RRC signaling.

In one embodiment, K1 is equal to 2, the K1 number ranges are: not greater than 2, greater than 2 and not greater than N2, in sequential order; N2 is configured by an RRC signaling, or, N2 is equal to 1706.

In one embodiment, K1 is equal to 3, the K1 number ranges are: not greater than 2, greater than 2 and not greater than N2, greater than N2 and not greater than N3, in sequential order; N2 is configured by an RRC signaling; N3 is configured by an RRC signaling, or, N3 is equal to 1706.

In one embodiment, K2 is equal to 4, the K2 number ranges are: not greater than 2, greater than 2 and not greater than N2, greater than N2 and not greater than N3, greater than N3 and not greater than 1706, in sequential order; N2 is configured by an RRC signaling, N3 is configured by an RRC signaling.

In one embodiment, for any positive integer n no greater than the K1, an identification number corresponding to the n-th PUCCH resource set of the K1 PUCCH resource sets is equal to n minus 1.

In one embodiment, for any positive integer n no greater than the K1, a pucch-ResourceSetId corresponding to the n-th PUCCH resource set of the K1 PUCCH resource sets is equal to n minus 1.

In one embodiment, the K1 PUCCH resource sets are configured by a higher layer signaling.

In one embodiment, the K1 PUCCH resource sets are configured by an RRC signaling.

In one embodiment, the K1 PUCCH resource sets are configured by a signaling whose name includes PUCCH-Config.

In one embodiment, the number of PUCCH resource sets included in the K1 PUCCH resource sets is not greater than 4.

In one embodiment, steps marked by the dotted-line box F1 exist.

In one embodiment, steps marked by the dotted-line box F1 do not exist.

**Embodiment 6**

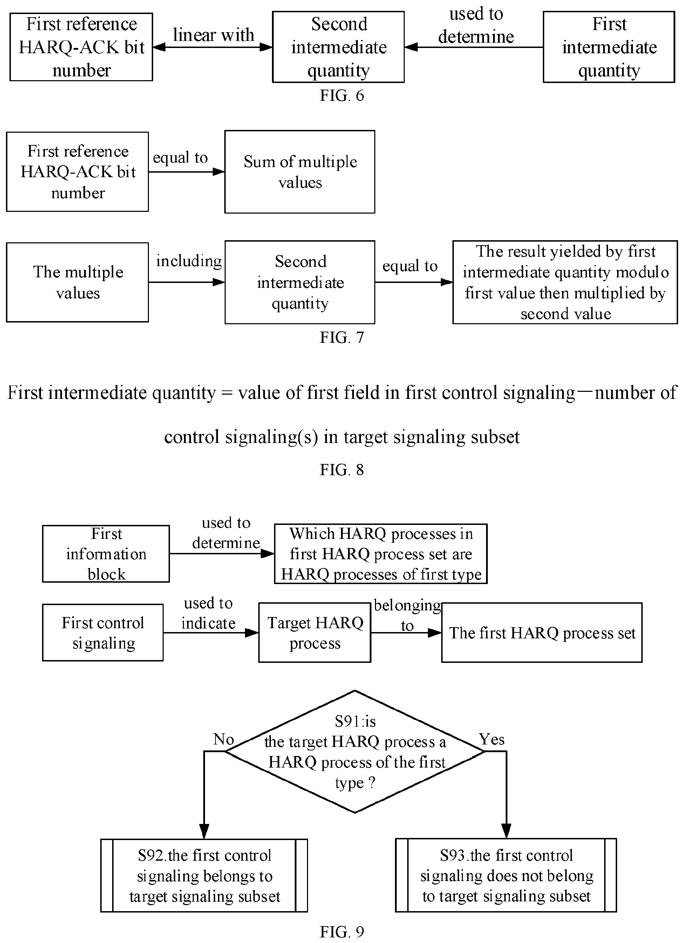

Embodiment 6 illustrates a schematic diagram of relations among a first reference HARQ-ACK bit number, a second intermediate quantity and a first intermediate quantity according to one embodiment of the present application, as shown in FIG. 6.

In Embodiment 6, the first reference HARQ-ACK bit number in the present application is linearly correlated with a second intermediate quantity, and the first intermediate quantity in the present application is used to determine the second intermediate quantity.

In one embodiment, the first reference HARQ-ACK bit number is linearly correlated with a fourth intermediate quantity, the fourth intermediate quantity being equal to a result yielded by the first intermediate quantity modulo a first value, the first value being a positive integer greater than 1.

In one embodiment, the second intermediate quantity is equal to a fourth intermediate quantity multiplied by a second value, the fourth intermediate quantity is equal to a result yielded by the first intermediate quantity modulo a first value, the first value being a positive integer greater than 1, the second value being a positive integer.

In one embodiment, the second intermediate quantity is equal to a result yielded by the first intermediate quantity modulo a first value then being multiplied by a second value; the first value being a positive integer greater than 1, the second value being a positive integer.

In one embodiment, the first value is equal to 2 to the power of T, T being a number of bits comprised in the first field.

In one embodiment, the first value is equal to 2 to the power of T, T being a number of bits comprised in a counter DAI field.

In one embodiment, the first value is equal to 2 to the power of T, T being equal to a number of bits comprised in a counter DAI field in the first control signaling.

In one embodiment, the second value is equal to 1.

In one embodiment, the second value is equal to 2.

In one embodiment, the second value is equal to 1 or 2.

In one embodiment, the second value is equal to a positive integer no greater than 16.

In one embodiment, the second value is equal to a positive integer no greater than 1024.

In one embodiment, when the value of maxNrofCodeWordsScheduledByDCI for any serving cell is 2 and harq-ACK-SpatialBundlingPUCCH is not provided, the second value is equal to 2; otherwise, the second value is equal to 1.

In one embodiment, when the value of maxNrofCodeWordsScheduledByDCI for any serving cell in frequency domain included by the first resource pool in the present application is 2 and harq-ACK-SpatialBundlingPUCCH is not provided, the second value is equal to 2; otherwise, the second value is equal to 1.

In one embodiment, the second value is equal to a maximum value in a first value set, the first value set comprising multiple values, the multiple values corresponding to multiple different serving cells, respectively.

In one embodiment, a DCI in the present application refers to a DCI format.

In one embodiment, any value in the first value set is linearly related to a maximum number of PDSCHs that can be scheduled by a DCI for a serving cell.

In one embodiment, any value in the first value set is linearly related to a maximum number of PDSCHs that can be scheduled by a DCI on an active downlink BWP of a serving cell.

In one embodiment, any value in the first value set is equal to a maximum number of PDSCHs that can be scheduled by a DCI for a serving cell by which the time-domain resource occupied belongs to the first resource pool in the present application being multiplied by one parameter value corresponding to the serving cell, the parameter value corresponding to the serving cell being equal to 1 or 2.

In one embodiment, any value in the first value set is equal to a maximum number of PDSCHs that can be scheduled by a DCI for a serving cell multiplied by one parameter value corresponding to the serving cell, the parameter value corresponding to the serving cell being equal to 1 or 2.

In one embodiment, any value in the first value set is equal to: a maximum number of PDSCHs on a serving cell that can be scheduled by a DCI being multiplied by a parameter value corresponding to the serving cell, the parameter value corresponding to the serving cell being equal to 1 or 2.

In one embodiment, any value in the first value set is equal to: a maximum number of PDSCHs that can be scheduled by a DCI on an active downlink BWP of a serving cell being multiplied by a parameter value corresponding to the serving cell, the parameter value corresponding to the serving cell being equal to 1 or 2.

In one embodiment, when the value of maxNrofCodeWordsScheduledByDCI for any serving cell is 2 and harq-ACK-SpatialBundlingPUCCH is not configured, a parameter value corresponding to the any serving cell is equal to 2; otherwise, the first parameter value is equal to 1.

In one embodiment, the first value set comprises only the first intermediate value .

In one embodiment, the first value set comprises multiple values.

## Embodiment 7

Embodiment 7 illustrates a schematic diagram of relations among a first reference HARQ-ACK bit number, a second intermediate quantity and a first intermediate quantity according to one embodiment of the present application, as shown in FIG. 7.

In Embodiment 7, the first reference HARQ-ACK bit number in the present application is equal to a sum of multiple values, a second intermediate quantity is one of the multiple values, and the second intermediate quantity is equal to a result yielded by the first intermediate quantity in the present application modulo a first value then being multiplied by a second value, the first value is a positive integer greater than 1, and the second value is a positive integer.

In one embodiment, control signalings in the first signaling set are all used for scheduling the PDSCH.

In one embodiment, the first value is equal to 2 to the power of T, T being a number of bits comprised in the first field.

In one embodiment, the first value is equal to 2 to the power of T, T being a number of bits comprised in a counter DAI field.

In one embodiment, the first value is equal to 2 to the power of T, T being equal to a number of bits comprised in a counter DAI field in the first control signaling.

In one embodiment, the second value is equal to 1.

In one embodiment, the second value is equal to 2.

In one embodiment, the second value is equal to 1 or 2.

In one embodiment, the second value is equal to a positive integer no greater than 16.

In one embodiment, the second value is equal to a positive integer no greater than 1024.

In one embodiment, when the value of maxNrofCodeWordsScheduledByDCI for any serving cell is 2 and harq-ACK-SpatialBundlingPUCCH is not provided, the second value is equal to 2; otherwise, the second value is equal to 1.

In one embodiment, when the value of maxNrofCodeWordsScheduledByDCI for any serving cell in frequency domain included by the first resource pool in the present application is 2 and harq-ACK-SpatialBundlingPUCCH is not provided, the second value is equal to 2; otherwise, the second value is equal to 1.

In one embodiment, the second value is equal to a maximum value in the first value set in the present application, the first value set comprising multiple values, the multiple values corresponding to multiple different serving cells, respectively.

In one embodiment, the multiple values include the second intermediate quantity and the third intermediate quantity, the third intermediate quantity being equal to a sum of multiple additive terms; one of the multiple additive terms being a number of all TBs received in a PDSCH scheduled by a control signaling in the target signaling subset, or a number of PDSCHs scheduled by a control signaling in the target signaling subset.

In one embodiment, the multiple values include the second intermediate quantity and the third intermediate quantity, the third intermediate quantity being equal to a sum of multiple additive terms; one of the multiple additive terms being a number of TBs received in a PDSCH scheduled by a control signaling in the target signaling subset, or a number of PDSCHs scheduled by a control signaling in the target signaling subset, or a number of control signalings in the target signaling subset for a serving cell that have been detected during a PDCCH monitoring occasion.

In one embodiment, the multiple values include the second intermediate quantity and the third intermediate quantity, the third intermediate quantity being equal to

$$\sum_{c\_b=0}^{B-1}\left(\sum_{m=0}^{M-1} N_{m,c\_b}^{\text{received}} + N_{\text{SPS},c\_b}\right) ; \quad \text{the}$$

$N_{m,c\_b}^{\text{received}}$ is: a number of TBs received in a PDSCH scheduled by a control signaling for serving cell c_b being detected in a m-th PDCCH monitoring occasion in the first resource pool in the target signaling subset, or, a number of PDSCHs scheduled by a control signaling for serving cell c_b being detected in the m-th PDCCH monitoring occasion in the first resource pool in the target signaling subset, or, a number of control signalings used to indicate SPS PDSCH release for serving cell c_b being detected in the m-th PDCCH monitoring occasion in the first resource pool in the target signaling subset, or, a number of control signalings used to indicate SCell dormancy for serving cell c_b being detected in the m-th PDCCH monitoring occasion in the first resource pool in the target signaling subset; $N_{\text{SPS},c\_b}$ is the number of SPS PDSCH receptions that were received on the serving cell c_b and for which corresponding HARQ-ACK information bits were sent in the first PUCCH; B and M are positive integers.

In one embodiment, the multiple values include the second intermediate quantity and the third intermediate quantity, the third intermediate quantity being equal to

$$\sum_{c\_b=0}^{B-1}\left(\sum_{m=0}^{M-1} N_{m,c\_b}^{\text{received}} + N_{\text{SPS},c\_b}\right) ; \quad \text{the}$$

$N_{m,c\_b}^{\text{received}}$ is: a number of TBs received in a PDSCH scheduled by a control signaling for serving cell c_b being detected in a m-th PDCCH monitoring occasion in the first resource pool in the target signaling subset, or, a number of PDSCHs scheduled by a control signaling for serving cell c_b being detected in the m-th PDCCH monitoring occasion in the first resource pool in the target signaling subset; $N_{\text{SPS},c\_b}$ is the number of SPS PDSCH receptions that were received on the serving cell c_b and for which corresponding HARQ-ACK information bits were sent in the first PUCCH; B and M are positive integers.

In one embodiment, the multiple values include the second intermediate quantity and the third intermediate quantity, the third intermediate quantity being equal to

$$\sum_{c\_b=0}^{B-1} \sum_{m=0}^{M-1} N_{m,c\_b}^{received} \; ; \text{ the } \quad N_{m,c\_b}^{received} \quad \text{is: a}$$

number of all TBs received in all PDSCHs scheduled by a control signaling used to schedule at least G PDSCHs for serving cell c_b being detected in a m-th PDCCH monitoring occasion in the first resource pool in the target signaling subset, or, a number of PDSCHs scheduled by a control signaling used to schedule at least G PDSCHs for serving cell c_b being detected in the m-th PDCCH monitoring occasion in the first resource pool in the target signaling subset; B and M are positive integers, and G is a positive integer no less than 2.

In one embodiment, the multiple values include the second intermediate quantity and the third intermediate quantity, the third intermediate quantity being equal to

$$\sum_{c\_b=0}^{B-1} \sum_{m=0}^{M-1} N_{m,c\_b}^{received} \; , \text{ the } \quad N_{m,c\_b}^{received} \quad \text{is: a}$$

number of all TBs scheduled by a control signaling used to schedule at least G PDSCHs for serving cell c_b being detected in a m-th PDCCH monitoring occasion in the first resource pool in the target signaling subset; G is a positive integer no less than 2.

In one embodiment, G is equal to 2.

In one embodiment, G is equal to 3.

In one embodiment, G is equal to 4.

In one embodiment, G is equal to a default value.

In one embodiment, G is configurable.

In one embodiment, harq-ACK-SpatialBundlingPUCCH is provided.

In one embodiment, harq-ACK-SpatialBundlingPUCCH is not provided.

In one embodiment, the first node is not configured with CBG-based PDSCH reception for any serving cell.

In one embodiment, the first node is configured with CBG-based PDSCH reception for at least one serving cell.

In one embodiment, the multiple values include the second intermediate quantity and the third intermediate quantity, the third intermediate quantity being equal to

$$\sum_{c\_b=0}^{B-1} \sum_{m=0}^{M-1} N_{m,c\_b}^{received,CBG} \; ; \text{ the } \quad N_{m,c\_b}^{received,CBG}$$

being: a number of Code block groups (CBGs) in the target signaling subset received in a PDSCH scheduled by a control signaling for serving cell c_b and that supports CBG-based PDSCH reception having been detected in a m-th PDCCH monitoring occasion in the first resource pool; B and M are positive integers.

In one embodiment, B in the present application is a positive integer.

In one embodiment, B in the present application is equal to the number of serving cells configured by higher layer signaling.

In one embodiment, B in the present application is equal to the number of serving cells configured by higher layer signaling that support one DCI scheduling multiple PDSCHs.

In one embodiment, B in the present application is equal to the number of serving cells configured by higher layer signaling that support one DCI scheduling at least G PDSCHs.

In one embodiment, B in the present application is equal to the number of serving cells configured by higher layer signaling that support CBG-based PDSCH reception.

In one embodiment, B in the present application is equal to the number of serving cells that are not provided with PDSCH-CodeBlockGroupTransmission.

In one embodiment, B in the present application is equal to the number of serving cells that are provided with PDSCH-CodeBlockGroupTransmission.

In one embodiment, M is equal to the number of time intervals in time domain included by the first resource pool in the present application.

In one embodiment, M is equal to the number of PDCCH monitoring occasions in time domain included by the first resource pool in the present application

In one embodiment, M in the present application is equal to a number of PDCCH monitoring occasions.

In one embodiment, the multiple values include the second intermediate quantity and the third intermediate quantity, the third intermediate quantity being equal to the sum of a plurality of additive terms; one additive term of the plurality of additive terms being a number of TBs received in a PDSCH scheduled by a control signaling in the target signaling subset, or a number of PDSCHs scheduled by a control signaling in the target signaling subset, or a number of control signalings in the first signaling set for a serving cell that are detected in a PDCCH monitoring occasion.

In one embodiment, the multiple values include the second intermediate quantity and the third intermediate quantity, the third intermediate quantity being equal to the sum of a plurality of additive terms; one additive term of the plurality of additive terms being a number of TBs received in a PDSCH scheduled by a control signaling in the first signaling set, or a number of PDSCHs scheduled by a control signaling in the first signaling set, or a number of control signalings in the first signaling set for a serving cell that are detected in a PDCCH monitoring occasion.

## Embodiment 8

Embodiment 8 illustrates a schematic diagram explaining a first intermediate quantity according to one embodiment of the present application, as shown in FIG. 8.

In Embodiment 8, the first intermediate quantity in the present application is equal to a value of the first field comprised in the first control signaling in the present application being subtracted by a number of control signaling(s) comprised in the target signaling subset in the present application.

## Embodiment 9

Embodiment 9 illustrates a schematic diagram explaining a first information block being used to determine whether a first control signaling belongs to a target signaling subset according to one embodiment of the present application, as shown in FIG. 9. In FIG. 9: in S91, determining whether a target HARQ process is a HARQ process of a first type; in S92, a first control signaling belongs to a target signaling subset; in S93, the first control signaling does not belong to the target signaling subset.

In Embodiment 9, the first information block in the present application is used to determine which HARQ processes in a first HARQ process set are HARQ processes of a first type, and the first control signaling in the present application is used to indicate a target HARQ process, the target HARQ process being a HARQ process in the first HARQ process set; when the target HARQ process is a HARQ process of the first type, the first control signaling does not belong to the target signaling subset in the present application; when the target HARQ process is not a HARQ process of the first type, the first control signaling belongs to the target signaling subset in the present application.

In one embodiment, the first HARQ process set comprises at least 2 HARQ Processes.

In one embodiment, the first HARQ process set comprises no more than 16 HARQ Processes.

In one embodiment, the first HARQ process set comprises no more than 32 HARQ Processes.

In one embodiment, the first HARQ process set comprises no more than 64 HARQ Processes.

In one embodiment, the first HARQ process set comprises no more than 128 HARQ Processes.

In one embodiment, the first HARQ process set is configured by a higher layer signaling.

In one embodiment, the first HARQ process set is configured by an RRC signaling.

In one embodiment, each of the HARQ processes in the first HARQ process set respectively corresponds to a different HARQ process number.

In one embodiment, at least one HARQ process in the first HARQ process set is a HARQ process of the first type, and, at least one HARQ process in the first HARQ process set is not a HARQ process of the first type.

In one embodiment, the first information block is used to indicate which HARQ processes in the first HARQ process set are HARQ processes of the first type.

In one embodiment, the first information block is used to explicitly indicate which HARQ processes in the first HARQ process set are HARQ processes of the first type.

In one embodiment, the first information block is used to implicitly indicate which HARQ processes in the first HARQ process set are HARQ processes of the first type.

In one embodiment, the first information block is used to configure at least one HARQ process in the first HARQ process set as HARQ process(es) of the first type.

In one embodiment, any HARQ process in the first HARQ process set is a HARQ process of a first type or a HARQ process of a second type, the first information block being used to determine which HARQ processes in the first HARQ process set are HARQ processes of the first type.

In one embodiment, when the target HARQ process is not a HARQ process of the first type: the target HARQ process is a HARQ process of the second type in this application.

In one embodiment, HARQ processes of the first type and HARQ processes of the second type are respectively two different types of HARQ processes distinguished by RRC signaling.

In one embodiment, HARQ processes of the first type and HARQ processes of the second type are respectively two different types of HARQ processes distinguished by the first information block.

In one embodiment, any HARQ process in the first HARQ process set is a HARQ process of a first type or a HARQ process of a second type, and the first information block is used to determine which HARQ processes in the first HARQ process set are HARQ processes of the first type and which HARQ processes in the first HARQ process set are HARQ processes of the second type.

In one embodiment, the first information block is used to indicate which HARQ processes in the first HARQ process set are HARQ processes of a first type and which HARQ processes in the first HARQ process set are HARQ processes of a second type.

In one embodiment, the first information block is used to explicitly indicate which HARQ processes in the first HARQ process set are HARQ processes of a first type and which HARQ processes in the first HARQ process set are HARQ processes of a second type.

In one embodiment, the first information block is used to implicitly indicate which HARQ processes in the first HARQ process set are HARQ processes of a first type and which HARQ processes in the first HARQ process set are HARQ processes of a second type.

In one embodiment, the first information block is used to configure a HARQ process in the first HARQ process set as a HARQ process of a first type or a HARQ process of a second type.

In one embodiment, HARQ processes of the first type and HARQ processes of the second type are respectively two different types of HARQ processes.

In one embodiment, a control signaling in the first signaling set that indicates SPS PDSCH release belongs to the target signaling subset.

In one embodiment, a control signaling in the first signaling set that indicates SCell dormancy belongs to the target signaling subset.

In one embodiment, a first HARQ process set comprises multiple HARQ processes, the first information block being used to determine which HARQ processes in the first HARQ process set are HARQ processes of a first type; one control signaling indicating a HARQ process of the first type in the first signaling set belongs to the target signaling subset.

In one embodiment, a first HARQ process set comprises multiple HARQ processes, the first information block being used to determine which HARQ processes in the first HARQ process set are HARQ processes of a first type; one control signaling indicating a HARQ process which is not a HARQ process of the first type in the first signaling set belongs to the target signaling subset.

In one embodiment, a first HARQ process set comprises multiple HARQ processes, the first information block being used to determine which HARQ processes in the first HARQ process set are HARQ processes of a first type and which HARQ processes in the first HARQ process set are HARQ processes of a second type; one control signaling indicating a HARQ process of the second type in the first signaling set belongs to the target signaling subset.

In one embodiment, when there exists at least one control signaling indicating SPS PDSCH release in the first signaling set: all control signalings indicating SPS PDSCH release in the first signaling set belong to the target signaling subset.

In one embodiment, when there exists at least one control signaling indicating SCell dormancy in the first signaling set: all control signalings indicating SCell dormancy in the first signaling set belong to the target signaling subset.

In one embodiment, a first HARQ process set comprises multiple HARQ processes, the first information block being used to determine which HARQ processes in the first HARQ process set are HARQ processes of a first type; all control signalings indicating the HARQ processes of the first type in the first signaling set belong to the target signaling subset.

In one embodiment, a first HARQ process set comprises multiple HARQ processes, the first information block being used to determine which HARQ processes in the first HARQ process set are HARQ processes of a first type; all control signalings indicating HARQ processes that are not any of the HARQ processes of the first type in the first signaling set belong to the target signaling subset.

In one embodiment, a first HARQ process set comprises multiple HARQ processes, the first information block being used to determine which HARQ processes in the first HARQ process set are HARQ processes of a first type and which HARQ processes in the first HARQ process set are HARQ processes of a second type; all control signalings indicating the HARQ processes of the second type in the first signaling set belong to the target signaling subset.

In one embodiment, a HARQ process indicated by one control signaling in the first signaling set means: a HARQ process corresponding to a HARQ process number indicated by a HARQ process number field in the control signaling in the first signaling set.

In one embodiment, the meaning of one control signaling in the first signaling set indicating a HARQ process of the first type comprises that the HARQ process corresponding to a HARQ process number indicated by the control signaling in the first signaling set is the HARQ process of the first type.

In one embodiment, the meaning of one control signaling in the first signaling set indicating a HARQ process of the second type comprises that the HARQ process corresponding to a HARQ process number indicated by the control signaling in the first signaling set is a HARQ process of the second type.

In one embodiment, in the present application any signaling in the first signaling set is a control signaling.

In one embodiment, the HARQ process of the first type is a HARQ process configured with HARQ-ACK feedback-enabled.

In one embodiment, the HARQ process of the first type is a HARQ process configured with HARQ-ACK feedback-disabled.

In one embodiment, the HARQ process of the first type is a HARQ-ACK feedback enabled HARQ process.

In one embodiment, the HARQ process of the first type is a HARQ-ACK feedback disabled HARQ process.

In one embodiment, the HARQ process of the first type is a feedback enabled HARQ process.

In one embodiment, the HARQ process of the first type is a feedback disabled HARQ process.

In one embodiment, the HARQ process of the first type is a HARQ-ACK enabled HARQ process.

In one embodiment, the HARQ process of the first type is a HARQ-ACK disabled HARQ process.

In one embodiment, the HARQ process of the first type is a HARQ process enabling HARQ-ACK feedback.

In one embodiment, the HARQ process of the first type is a HARQ process disabling HARQ-ACK feedback.

In one embodiment, the first node does not transmit HARQ-ACK feedback for HARQ processes of the first type.

In one embodiment, the first node transmits HARQ-ACK feedback for HARQ processes of the first type, and the first node does not transmit HARQ-ACK feedback for HARQ processes of the second type.

In one embodiment, the first node does not transmit HARQ-ACK feedback for HARQ processes of the first type, and the first node transmits HARQ-ACK feedback for HARQ processes of the second type.

In one embodiment, the HARQ process of the first type is a HARQ process configured with HARQ-ACK feedback-enabled, while the HARQ process of the second type is a HARQ process configured with HARQ-ACK feedback-disabled.

In one embodiment, the HARQ process of the second type is a HARQ process configured with HARQ-ACK feedback-enabled, while the HARQ process of the first type is a HARQ process configured with HARQ-ACK feedback-disabled.

In one embodiment, the HARQ process of the first type is a HARQ-ACK feedback-enabled HARQ process, while the HARQ process of the second type is a HARQ-ACK feedback-disabled HARQ process.

In one embodiment, the HARQ process of the first type is a HARQ-ACK feedback-disabled HARQ process, while the HARQ process of the second type is a HARQ-ACK feedback-enabled HARQ process.

In one embodiment, the HARQ process of the first type is a HARQ process enabling HARQ-ACK feedback, while the HARQ process of the second type is a HARQ process disabling HARQ-ACK feedback.

In one embodiment, the HARQ process of the second type is a HARQ process enabling HARQ-ACK feedback, while the HARQ process of the first type is a HARQ process disabling HARQ-ACK feedback.

In one embodiment, the HARQ process of the first type and the HARQ process of the second type are respectively HARQ processes that use different feedback processing methods.

In one embodiment, the HARQ process of the first type and the HARQ process of the second type are respectively HARQ processes that use different HARQ-ACK feedback processing methods.

In one embodiment, the HARQ process of the first type and the HARQ process of the second type are respectively HARQ processes that are configured with different HARQ-ACK feedback processing methods.

In one embodiment, the HARQ process of the first type and the HARQ process of the second type are respectively HARQ processes that are configured with different parameter values indicating different HARQ-ACK feedback processing methods.

In one embodiment, HARQ process numbers corresponding to the HARQ processes of the first type belong to a first value range, the first value range being configured by RRC signaling; at least one HARQ process in the first HARQ process set corresponds to HARQ process number(s) not belonging to the first value range, and, at least one HARQ process in the first HARQ process set corresponds to HARQ process number(s) belonging to the first value range.

In one embodiment, HARQ process numbers corresponding to the HARQ processes of the second type do not belong to a first value range, the first value range being configured by RRC signaling; at least one HARQ process in the first HARQ process set corresponds to HARQ process number(s) not belonging to the first value range, and, at least one HARQ process in the first HARQ process set corresponds to HARQ process number(s) belonging to the first value range.

In one embodiment, HARQ process numbers corresponding to HARQ processes of the first type do not belong to a first value range, the first value range being configured by RRC signaling; at least one HARQ process in the first HARQ process set corresponds to HARQ process number(s) not belonging to the first value range, and, at least one HARQ process in the first HARQ process set corresponds to HARQ process number(s) belonging to the first value range.

In one embodiment, HARQ process numbers corresponding to the HARQ processes of the second type belong to a first value range, the first value range being configured by RRC signaling; at least one HARQ process in the first HARQ process set corresponds to HARQ process number(s) not belonging to the first value range, and, at least one HARQ process in the first HARQ process set corresponds to HARQ process number(s) belonging to the first value range.

## Embodiment 10

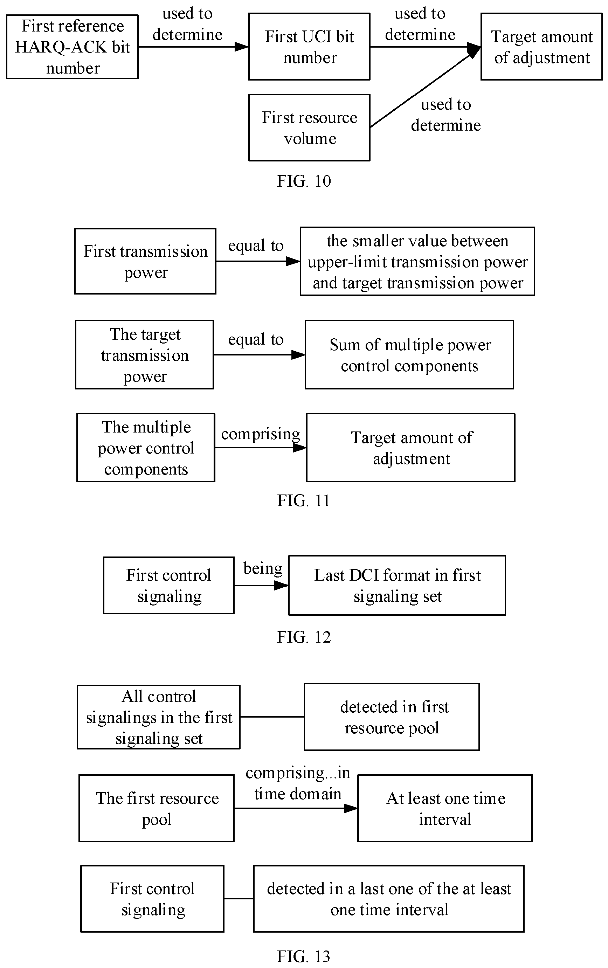

Embodiment 10 illustrates a schematic diagram of relations among a first reference HARQ-ACK bit number, a first UCI bit number, a first resource volume and a target amount of adjustment according to one embodiment of the present application, as shown in FIG. 10.

In Embodiment 10, the first reference HARQ-ACK bit number in this application is used to determine a first UCI bit number, the first UCI bit number and a first resource volume are used together to determine the target amount of adjustment in this application, the first resource volume being a number of resource elements (REs) used for bearing UCI transmitted in the first PUCCH.

In one embodiment, the first reference HARQ-ACK bit number is used to determine a first UCI bit number, where the first UCI bit number and a first resource volume are used together to determine a target amount of adjustment, the first resource volume being no greater than a number of REs occupied by the first PUCCH.

In one embodiment, the first reference HARQ-ACK bit number is used to determine a first UCI bit number, where the first UCI bit number and a first resource volume are used together to determine a target amount of adjustment, the first resource volume being no greater than a number of REs comprised in time-frequency domain by a PUCCH resource to which the resource occupied by the first PUCCH belongs.

In one embodiment, the first resource volume is a number of REs occupied by the first PUCCH.

In one embodiment, the first resource volume is a number of REs occupied by the first PUCCH in time-frequency domain.

In one embodiment, the first resource volume is a number of REs occupied by a transmission of the first PUCCH excluding RE(s) occupied by a Demodulation reference signal (DMRS).

In one embodiment, that the first UCI bit number and the first resource volume are used together to determine the target amount of adjustment includes that: a second amount of calculation is equal to a product of $K_1$ and the first UCI bit number being divided by the first resource volume, and the target amount of adjustment is equal to 10 multiplied by the logarithm of the second amount of calculation to the base 10, where $K_1$ is a constant or is configurable.

In one embodiment, $K_1$ is greater than 1.

In one embodiment, $K_1$ is an integer greater than 1.

In one embodiment, $K_1$ is a non-integer greater than 1.

In one embodiment, $K_1$ is equal to 6.

In one embodiment, $K_1$ is equal to 2.4.

In one embodiment, $K_1$ is configured by an RRC signaling.

In one embodiment, that the first UCI bit number and the first resource volume are used together to determine the target amount of adjustment means that a second amount of calculation is equal to a product of $K_1$ and the first UCI bit number being divided by the first resource volume, and the target amount of adjustment = $10 \times \log_{10}($ the second amount of calculation$)$, where $K_1$ is equal to 6.

In one embodiment, a second amount of calculation is equal to a product of $K_1$ and the first UCI bit number being divided by the first resource volume, and the target amount of adjustment = $10 \times \log_{10}($ the second amount of calculation$)$, where $K_1$ is equal to 6.

In one embodiment, a ratio of the first UCI bit number to the first resource volume is used to determine the target amount of adjustment.

In one embodiment, the target amount of adjustment is linear with a product of the first UCI bit number and the first resource volume.

In one embodiment, 10^(the target amount of adjustment/10) is linear with {the first UCI bit number/the first resource volume}.

In one embodiment, a ratio of the first UCI bit number to the first resource volume is used to determine the target amount of adjustment.

In one embodiment, the first UCI bit number is equal to a sum of multiple reference HARQ-ACK bit numbers, the first reference HARQ-ACK bit number being one of the multiple reference HARQ-ACK bit numbers; each of the multiple reference HARQ-ACK bit numbers is a number of HARQ-ACK bit(s) determined for obtaining a transmission power of PUCCH.

In one embodiment, any of the multiple reference HARQ-ACK bit numbers is equal to a non-negative integer.

In one embodiment, the multiple reference HARQ-ACK bit numbers respectively correspond to different HARQ-ACK sub-codebooks.

In one embodiment, one of the multiple reference HARQ-ACK bit numbers is for a CBG-based PDSCH reception.

In one embodiment, the first UCI bit number is equal to the first reference HARQ-ACK bit number.

In one embodiment, the first UCI bit number is linear with the first reference HARQ-ACK bit number.

In one embodiment, the first reference HARQ-ACK bit number is one of multiple addends for obtaining the first UCI bit number.

In one embodiment, the first UCI bit number is equal to a sum of multiple UCI bit numbers, with the first reference HARQ-ACK bit number being one of the multiple UCI bit numbers.

In one embodiment, the first UCI bit number is equal to a sum of multiple UCI bit numbers; a sum of multiple reference HARQ-ACK bit numbers is one of the multiple UCI bit numbers, with the first reference HARQ-ACK bit number being one of the multiple reference HARQ-ACK bit numbers, where each of the multiple reference HARQ-ACK bit numbers is a number of HARQ-ACK bit(s) determined for obtaining a transmission power of PUCCH.

In one embodiment, any of the multiple UCI bit numbers is a number of UCI bit(s).

In one embodiment, one of the multiple UCI bit numbers is a number of SR information bit(s).

In one embodiment, one of the multiple UCI bit numbers is a number of CSI bit(s).

In one embodiment, the first UCI bit number is equal to a sum of the first reference HARQ-ACK bit number, a number of Scheduling request (SR) information bits carried by the first PUCCH and a number of Channel State Information (CSI) bits carried by the first PUCCH.

In one embodiment, the first UCI bit number is equal to a sum of multiple reference HARQ-ACK bit numbers plus a number of SR information bits carried by the first PUCCH plus a number of CSI information bits carried by the first PUCCH, where the first reference HARQ-ACK bit number is one of the multiple reference HARQ-ACK bit numbers; each of the multiple reference HARQ-ACK bit numbers is a number of HARQ-ACK bits determined for the purpose of obtaining the transmission power of the PUCCH.

In one embodiment, a number of SR information bit(s) carried by the first PUCCH is equal to 0.

In one embodiment, a number of SR information bit(s) carried by the first PUCCH is greater than 0.

In one embodiment, a number of CSI information bit(s) carried by the first PUCCH is equal to 0.

In one embodiment, a number of CSI information bit(s) carried by the first PUCCH is greater than 0.

## Embodiment 11

Embodiment 11 illustrates a schematic diagram of relations among a first transmission power, a target transmission power and a target amount of adjustment according to one embodiment of the present application, as shown in FIG. 11.

In Embodiment 11, the first transmission power in the present application is equal to a smaller value between an upper-limit transmission power and a target transmission power, where the target transmission power is a sum of multiple power control components, with the target amount of adjustment in the present application being one of the multiple power control components.

In one embodiment, that the target transmission power is equal to a sum of the multiple power control components is for dB domain.

In one embodiment, in terms of dB, the target transmission power is equal to a sum of the multiple power control components.

In one embodiment, a power control component among the multiple power control components is measured in dBm or dB.

In one embodiment, the upper-limit transmission power is default.

In one embodiment, the upper-limit transmission power is configured by an RRC signaling.

In one embodiment, the upper-limit transmission power is a configured maximum output power.

In one embodiment, the upper-limit transmission power is provided for a PUCCH transmission occasion.

In one embodiment, the upper-limit transmission power is a configured maximum output power for a single-carrier UE.

In one embodiment, a symbol indicating the upper-limit transmission power includes $P_{\text{CMAX}, f,c}$.

In one embodiment, the upper-limit transmission power is measured in dBm.

In one embodiment, the upper-limit transmission power is measured in Watts (W).

In one embodiment, the upper-limit transmission power is measured in milli-Watts (mW).

In one embodiment, the first transmission power is equal to min{upper-limit transmission power, target transmission power}.

In one embodiment, the first transmission power is equal to a smaller value between an upper-limit transmission power and a target transmission power, where the target transmission power is linear with the target amount of adjustment, and the upper-limit transmission power is default or configurable.

In one embodiment, the target transmission power is linear with the target amount of adjustment.

In one embodiment, the linear relation between the target transmission power and the target amount of adjustment refers to that the target transmission power and the target amount of adjustment are linear with each other in dB domain.

In one embodiment, the linear relation between the target transmission power and the target amount of adjustment refers to that the target transmission power and the target amount of adjustment are linear with each other in terms of dB.

In one embodiment, the target transmission power is measured in dBm, and the target amount of adjustment is measured in dB.

In one embodiment, the target transmission power is equal to a sum of a target amount of adjustment plus other power control components, where one power control component of the other power control components is configurable or related to the first PUCCH or obtained based on indication.

In one embodiment, in terms of dB, the target transmission power is equal to a sum of multiple power control components, the multiple power control components including the target amount of adjustment and other power control components, the other power control components including at least one of a first power control component, a second power control component, a third power control component, a fourth power control component or a fifth power control component.

In one embodiment, the target transmission power is equal to a sum of multiple power control components, the multiple power control components including the target amount of adjustment and other power control components, the other power control components including at least one of a first power control component, a second power control component, a third power control component, a fourth power control component or a fifth power control component.

In one embodiment, the first transmission power is equal to a smaller value between an upper-limit transmission power and a target transmission power, where the target transmission power is a product of multiple power control components, with the target amount of adjustment in the present application being one of the multiple power control components; the upper-limit transmission power is default or configurable.

In one embodiment, the first transmission power is equal to a smaller value between an upper-limit transmission power and a target transmission power, where the target transmission power is directly proportional to the target amount of adjustment, and the upper-limit transmission power is default or configurable.

In one embodiment, the target transmission power is equal to a product of multiple power control components, the multiple power control components including the target amount of adjustment and other power control components, the other power control components including at least one of a first power control component, a second power control component, a third power control component, a fourth power control component or a fifth power control component.

In one embodiment, the other power control components include at least one power control component.

In one embodiment, the other power control components include multiple power control components.

In one embodiment, one of the other power control components is defined in 3GPP TS38.213, Section 7.2.1.

In one embodiment, the other power control components include at least one of a first power control component, a second power control component, a third power control component, a fourth power control component or a fifth power control component.

In one embodiment, the target transmission power is equal to a sum of the target amount of adjustment, a first power control component, a second power control component, a third power control component, a fourth power control component and a fifth power control component.

In one embodiment, a p0-nominal field is used for configuring the first power control component.

In one embodiment, a P0-PUCCH field is used for configuring the first power control component.

In one embodiment, a p0-PUCCH-Value field is used for configuring the first power control component.

In one embodiment, the first power control component is equal to 0.

In one embodiment, the first power control component is measured in dBm.

In one embodiment, the first power control component is measured in Watts (W).

In one embodiment, the first power control component is measured in milli-Watts (mW).

In one embodiment, symbols in which the first power control component is expressed include $P_{O\_PUCCH,b,f,c}$.

In one embodiment, symbols in which the first power control component is expressed include O_PUCCH.

In one embodiment, the first power control component is equal to a sum of two sub-components, of which any component is a default value or configured by an RRC signaling.

In one embodiment, the first power control component is equal to a sum of two sub-components, of which one is a p0-PUCCH-Value or equal to 0 and the other is configured in a p0-nominal field or equal to 0dBm.

In one embodiment, the first power control component is configurable.

In one embodiment, the first PUCCH is used to determine the second power control component.

In one embodiment, frequency-domain resources occupied by the first PUCCH are used to determine the second power control component.

In one embodiment, the second power control component is equal to $10 \times \log_{10}(2^{\wedge}\mu \times M_{RB})$, where the $M_{RB}$ is equal to the number of resource blocks comprised in frequency domain by all or part of a PUCCH resource to which the resource occupied by the first PUCCH belongs, and the $\mu$ is a Subcarrier spacing (SCS) configuration.

In one embodiment, the second power control component is equal to $10 \times \log_{10}(2^{\wedge}\mu \times M_{RB})$, where the $M_{RB}$ is equal to the number of resource blocks comprised in frequency domain by the resource occupied by the first PUCCH, and the $\mu$ is a Subcarrier spacing (SCS) configuration.

In one embodiment, the second power control component is equal to $2^{\wedge}\mu \times M_{RB}$, where the $M_{RB}$ is equal to the number of resource blocks comprised in frequency domain by the resource occupied by the first PUCCH, and the $\mu$ is a Subcarrier spacing (SCS) configuration.

In one embodiment, $\mu$ is configurable.

In one embodiment, the third power control component is a downlink pathloss estimate.

In one embodiment, the third power control component is measured in dB.

In one embodiment, the third power control component is obtained by calculation based on a measurement for a reference signal.

In one embodiment, symbols in which the third power control component is expressed include $PL_{b,f,c}$.

In one embodiment, symbols in which the third power control component is expressed include PL.

In one embodiment, the third power control component is measured in Watts (W).

In one embodiment, the third power control component is measured in milli-Watts (mW).

In one embodiment, the fourth power control component is one of a value of deltaF-PUCCH-f2, a value of deltaF-PUCCH-f3, a value of deltaF- PUCCH-f4 or 0.

In one embodiment, the fourth power control component is equal to a default value or is configured by an RRC signaling.

In one embodiment, the fourth power control component is related to a PUCCH format.

In one embodiment, the fourth power control component is related to a PUCCH format used by the first PUCCH.

In one embodiment, the first PUCCH uses one of PUCCH format 2 or PUCCH format 3 or PUCCH format 4; when the first PUCCH uses PUCCH format 2, the fourth power control component is a value of deltaF-PUCCH-f2 or 0; when the first PUCCH uses PUCCH format 3, the fourth power control component is a value of deltaF-PUCCH-f3 or 0; when the first PUCCH uses PUCCH format 4, the fourth power control component is a value of deltaF- PUCCH-f4 or 0.

In one embodiment, symbols in which the fourth power control component is expressed include $\Delta_{F\_PUCCH}$.

In one embodiment, symbols in which the fourth power control component is expressed include F_PUCCH.

In one embodiment, the fifth power control component is a PUCCH power control adjustment state.

In one embodiment, the fifth power control component is obtained based on an indication by a TPC field in a DCI format.

In one embodiment, the fifth power control component is determined based on a Transmit power control (TPC) command.

In one embodiment, a value of the fifth power control component is for a PUCCH transmission occasion corresponding to the first PUCCH.

In one embodiment, a field of TPC command for scheduled PUCCH in the first control signaling is used to determine the fifth power control component.

In one embodiment, in terms of dB, the fifth power control component is linear with a value indicated by a field of TPC command for scheduled PUCCH in the first control signaling.

In one embodiment, symbols in which the fifth power control component is expressed include $g_{b,f,c}$.

In one embodiment, symbols in which the target amount of adjustment is expressed include $\Delta$.

In one embodiment, symbols in which the target amount of adjustment is expressed include $\Delta TF,b,f,c$.

In one embodiment, the first PUCCH uses one of a PUCCH format 2, or a PUCCH format 3 or a PUCCH format 4.

In one embodiment, the first PUCCH also occupies a code-domain resource.

## Embodiment 12

Embodiment 12 illustrates a schematic diagram explaining a first control signaling according to one embodiment of the present application, as shown in FIG. 12.

In Embodiment 12, the first control signaling in the present application is a last DCI format in the first signaling set in the present application.

In one embodiment, the first signaling set comprises at least one DCI format.

In one embodiment, the first signaling set comprises multiple DCI formats.

In one embodiment, the first control signaling is detected in a first PDCCH monitoring occasion and, a corresponding serving cell index of a serving cell targeted by the first control signaling is equal to c; an index corresponding to the first PDCCH monitoring occasion is equal to m, both m and c are non-negative integers; any DCI format in the first signaling set is detected in a PDCCH monitoring occasion whose corresponding index is less than m, or, is detected in the first PDCCH monitoring occasion and a corresponding serving cell index of the targeted serving cell is not greater than c.

In one embodiment, the first control signaling is detected in a first PDCCH monitoring occasion and, a corresponding serving cell index of a serving cell targeted by the first control signaling is equal to c; an index corresponding to the first PDCCH monitoring occasion is equal to m, both m and c are non-negative integers; any DCI format in the first signaling set is detected in a PDCCH monitoring occasion whose corresponding index is less than m, or, is detected in the first PDCCH monitoring occasion and a corresponding serving cell index of the targeted serving cell is not less than c.

In one embodiment, the first node is configured with only one serving cell.

In one embodiment, the first node is configured with multiple service cells, the first field is a COUNTER DAI field; the first control signaling is a last DCI format in the first signaling set, there isn't any DCI format including a total DAI field that is detected in a PDCCH monitoring occasion to which the first control signaling belongs in time domain.

## Embodiment 13

Embodiment 13 illustrates a schematic diagram explaining a first control signaling according to one embodiment of the present application, as shown in FIG. 13.

In Embodiment 13, all control signalings in the first signaling set in the present application are detected in a first resource pool, the first resource pool comprising at least one time interval in time domain; the first control signaling in the present application is detected in a last one of the at least one time interval.

In one embodiment, the first resource pool comprises multiple time intervals in time domain.

In one embodiment, all control signalings in the first signaling set are detected in a first resource pool, the first resource pool comprising multiple time intervals in time domain; the first control signaling is detected in a last one of the multiple time intervals.

In one embodiment, the multiple time intervals each correspond to a different index, and a last time interval among the multiple time intervals is the time interval corresponding to a largest index among the multiple time intervals.

In one embodiment, a last time interval among the multiple time intervals is the time interval with a latest start time among the multiple time intervals.

In one embodiment, the multiple time intervals are respectively multiple PDCCH monitoring occasions, a last time interval among the multiple time intervals being the PDCCH monitoring occasion associated with a search space set with a latest start time among the multiple time intervals.

In one embodiment, the first node is configured with multiple serving cells, the first field being a total DAI field.

In one embodiment, the first resource pool comprises at least one time interval in time domain, and the first resource pool comprises at least one serving cell in frequency domain.

In one embodiment, the first resource pool comprises resources determined by at least one {serving cell, time interval}-pair.

In one embodiment, the first resource pool comprises at least one time interval on at least one serving cell.

In one embodiment, one of the stated time intervals in this application is a Physical downlink control channel (PDCCH) monitoring occasion.

In one embodiment, a time interval mentioned in the present application comprises at least one multicarrier symbol.

In one embodiment, the multicarrier symbol in the present application is an Orthogonal Frequency Division Multiplexing (OFDM) Symbol.

In one embodiment, the multicarrier symbol in the present application is a Single Carrier- Frequency Division Multiple Access (SC-FDMA) symbol.

In one embodiment, the multicarrier symbol in the present application is a Discrete Fourier Transform Spread OFDM (DFT-S-OFDM) symbol.

In one embodiment, the multicarrier symbol in the present application is a Filter Bank Multi Carrier (FBMC) symbol.

In one embodiment, the multicarrier symbol in the present application comprises a Cyclic Prefix (CP).

## Embodiment 14

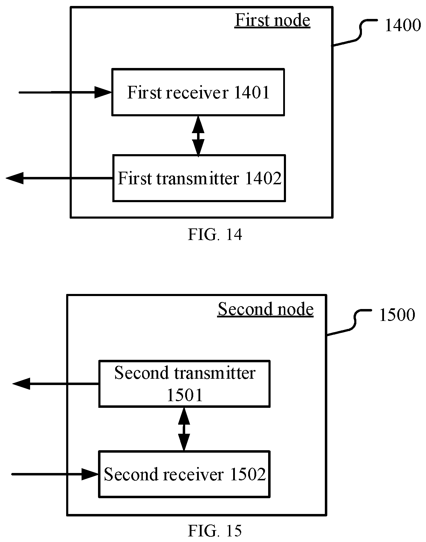

Embodiment 14 illustrates a structure block diagram a processing device in a first node, as shown in FIG. 14. In FIG. 14, a processing device 1400 in a first node comprises a first receiver 1401 and a first transmitter 1402.

In one embodiment, the first node 1400 is a UE.

In one embodiment, the first node 1400 is a relay node.

In one embodiment, the first node 1400 is vehicle-mounted communication equipment.

In one embodiment, the first node 1400 is a UE supporting V2X communications.

In one embodiment, the first node 1400 is a relay node supporting V2X communications.

In one embodiment, the first receiver 1401 comprises at least one of the antenna 452, the receiver 454, the multi-antenna receiving processor 458, the receiving processor 456, the controller/processor 459, the memory 460 or the data source 467 in FIG. 4 of the present application.

In one embodiment, the first receiver 1401 comprises at least the first five of the antenna 452, the receiver 454, the multi-antenna receiving processor 458, the receiving processor 456, the controller/processor 459, the memory 460 and the data source 467 in FIG. 4 of the present application.

In one embodiment, the first receiver 1401 comprises at least the first four of the antenna 452, the receiver 454, the multi-antenna receiving processor 458, the receiving processor 456, the controller/processor 459, the memory 460 and the data source 467 in FIG. 4 of the present application.

In one embodiment, the first receiver 1401 comprises at least the first three of the antenna 452, the receiver 454, the multi-antenna receiving processor 458, the receiving processor 456, the controller/processor 459, the memory 460 and the data source 467 in FIG. 4 of the present application.

In one embodiment, the first receiver 1401 comprises at least the first two of the antenna 452, the receiver 454, the multi-antenna receiving processor 458, the receiving processor 456, the controller/processor 459, the memory 460 and the data source 467 in FIG. 4 of the present application.

In one embodiment, the first transmitter 1402 comprises at least one of the antenna 452, the transmitter 454, the multi-antenna transmitting processor 457, the transmitting processor 468, the controller/processor 459, the memory 460 or the data source 467 in FIG. 4 of the present application.

In one embodiment, the first transmitter 1402 comprises at least the first five of the antenna 452, the transmitter 454, the multi-antenna transmitting processor 457, the transmitting processor 468, the controller/processor 459, the memory 460 and the data source 467 in FIG. 4 of the present application.

In one embodiment, the first transmitter 1402 comprises at least the first four of the antenna 452, the transmitter 454, the multi-antenna transmitting processor 457, the transmitting processor 468, the controller/processor 459, the memory 460 and the data source 467 in FIG. 4 of the present application.

In one embodiment, the first transmitter 1402 comprises at least the first three of the antenna 452, the transmitter 454, the multi-antenna transmitting processor 457, the transmitting processor 468, the controller/processor 459, the memory 460 and the data source 467 in FIG. 4 of the present application.

In one embodiment, the first transmitter 1402 comprises at least the first two of the antenna 452, the transmitter 454, the multi-antenna transmitting processor 457, the transmitting processor 468, the controller/processor 459, the memory 460 and the data source 467 in FIG. 4 of the present application.

In Embodiment 14, the first receiver 1401 receives a first information block and a first signaling set, the first signaling set comprising multiple control signalings, and a first control signaling being a control signaling comprised in the first signaling set; and the first transmitter 1402 transmits a first PUCCH with a first transmission power, the first PUCCH carrying at least one HARQ-ACK bit; herein, a first reference HARQ-ACK bit number is used to determine the first transmission power, the first reference HARQ-ACK bit number being a positive integer; the first control signaling comprises a first field, a value of the first field comprised in the first control signaling being a positive integer; a first intermediate quantity is used to determine the first reference HARQ-ACK bit number, the first intermediate quantity being linear with the value of the first field comprised in the first control signaling; the first signaling set comprises a target signaling subset, the target signaling subset comprising at least one control signaling, the first intermediate quantity being linear with a number of control signaling(s) comprised in the target signaling subset, the first information block being used to determine whether the first control signaling belongs to the target signaling subset.

In one embodiment, the first intermediate quantity is equal to the value of the first field comprised in the first control signaling being subtracted by the number of control signaling(s) comprised in the target signaling subset.

In one embodiment, the first reference HARQ-ACK bit number is linear with a second intermediate quantity, and the second intermediate quantity is equal to a result yielded by the first intermediate quantity modulo a first value then being multiplied by a second value; the first value is equal to 2 to the power of T, T being a number of bits comprised in a counter DAI field, and the second value is a positive integer.

In one embodiment, the first information block is used to determine which HARQ processes in a first HARQ process set are HARQ processes of a first type, and the first control signaling is used to indicate a target HARQ process, the target HARQ process being a HARQ process in the first HARQ process set; when the target HARQ process is a HARQ process of the first type, the first control signaling does not belong to the target signaling subset; when the target HARQ process is not a HARQ process of the first type, the first control signaling belongs to the target signaling subset.

In one embodiment, the first control signaling is a last DCI format in the first signaling set.

In one embodiment, all control signalings in the first signaling set are detected in a first resource pool, the first resource pool comprising at least one time interval in time domain; the first control signaling is detected in a last one of the at least one time interval.

In one embodiment, the first receiver 1401 receives a first PDSCH group; herein, the first PDSCH group comprises at least one PDSCH, and at least one control signaling in the target signaling subset is used to schedule the first PDSCH group, the first PDSCH group being used to determine the first reference HARQ-ACK bit number.

In one embodiment, the first reference HARQ-ACK bit number is used to determine a target amount of adjustment, and the first transmission power is equal to a smaller value between an upper-limit transmission power and a target transmission power, the target amount of adjustment being used to determine the target transmission power, and the upper-limit transmission power being default or configurable.

In one embodiment, the first receiver 1401 receives a first information block and a first signaling set, the first signaling set comprising multiple control signalings, and a first control signaling being a control signaling comprised in the first signaling set, each control signaling in the first signaling set being a DCI format; the first transmitter 1402 transmits a first PUCCH with a first transmission power, the first PUCCH carrying at least one HARQ-ACK bit; herein, a first reference HARQ-ACK bit number is a number of HARQ-ACK bit(s) determined for obtaining a transmission power of PUCCH, and the first reference HARQ-ACK bit number is used to determine a target amount of adjustment, the first transmission power is equal to a smaller value between an upper-limit transmission power and a target transmission power, where the target transmission power is linear with the target amount of adjustment, and the upper-limit transmission power is default or configurable; the first control signaling comprises a first field, the first field being a counter DAI field or total DAI field; the first signaling set comprises a target signaling subset, the target signaling subset comprising at least one control signaling; a first intermediate quantity is used to determine the first reference HARQ-ACK bit number, the first intermediate quantity being equal to a value of the first field comprised in the first control signaling being subtracted by a number of control signaling(s) comprised in the target signaling subset; the first information block is used to determine which HARQ processes in a first HARQ process set are HARQ processes of a first type; a HARQ process of the first type is a HARQ process configured with HARQ-ACK feedback disabled; the first control signaling is used to indicate a target HARQ process, the target HARQ process being a HARQ process in the first HARQ process set; when the target HARQ process is a HARQ process of the first type, the first control signaling does not belong to the target signaling subset; when the target HARQ process is not a HARQ process of the first type, the first control signaling belongs to the target signaling subset.

In one subembodiment, a HARQ process of a second type is a HARQ process configured with HARQ-ACK feedback enabled; when the target HARQ process is not a HARQ process of the first type: the target HARQ process is a HARQ process of the second type.

In one subembodiment, the first reference HARQ-ACK bit number is linear with a second intermediate quantity, and the second intermediate quantity is equal to a result yielded by the first intermediate quantity modulo a first value then being multiplied by a second value; the first value is equal to 2 to the power of T, T being a number of bits comprised in a counter DAI field, and the second value is equal to 1 or 2.

In one embodiment, the first receiver 1401 receives a first information block and a first signaling set, the first signaling set comprising multiple control signalings, and a first control signaling being a control signaling comprised in the first signaling set, each control signaling in the first signaling set being a DCI format; the first transmitter 1402 transmits a first PUCCH with a first transmission power, the first PUCCH carrying at least one HARQ-ACK bit; herein, a first reference HARQ-ACK bit number is a number of HARQ-ACK bit(s) determined for obtaining a transmission power of PUCCH, and the first reference HARQ-ACK bit number is used to determine a target amount of adjustment, the first transmission power is equal to a smaller value between an upper-limit transmission power and a target transmission power, where the target transmission power is linear with the target amount of adjustment, and the upper-limit transmission power is default or configurable; the first control signaling comprises a first field, the first field being a counter DAI field or total DAI field; the first signaling set comprises a target signaling subset, the target signaling subset comprising at least one control signaling; a first intermediate quantity is used to determine the first reference HARQ-ACK bit number, the first intermediate quantity being equal to a value of the first field comprised in the first control signaling being subtracted by a number of control signaling(s) comprised in the target signaling subset; the first information block is used to determine which HARQ processes in a first HARQ process set are HARQ processes of a first type; a HARQ process of the first type is a HARQ process configured with HARQ-ACK feedback enabled; the first control signaling is used to indicate a target HARQ process, the target HARQ process being a HARQ process in the first HARQ process set; when the target HARQ process is not a HARQ process of the first type, the first control signaling does not belong to the target signaling subset; when the target HARQ process is a HARQ process of the first type, the first control signaling belongs to the target signaling subset.

In one subembodiment, a HARQ process of a second type is a HARQ process configured with HARQ-ACK feedback disabled; when the target HARQ process is not a HARQ process of the first type: the target HARQ process is a HARQ process of the second type.

In one subembodiment, the first reference HARQ-ACK bit number is linear with a second intermediate quantity, and the second intermediate quantity is equal to a result yielded by the first intermediate quantity modulo a first value then being multiplied by a second value; the first value is equal to 2 to the power of T, T being a number of bits comprised in a counter DAI field, and the second value is equal to 1 or 2.

In one embodiment, the first receiver 1401 receives a first information block and a first signaling set, the first signaling set comprising multiple control signalings, and a first control signaling being a control signaling comprised in the first signaling set, each control signaling in the first signaling set being a DCI format; the first transmitter 1402 transmits a first PUCCH with a first transmission power, the first PUCCH carrying at least one HARQ-ACK bit; herein, a first reference HARQ-ACK bit number is a number of HARQ-ACK bit(s) determined for obtaining a transmission power of PUCCH, and the first reference HARQ-ACK bit number is used to determine a target amount of adjustment, the first transmission power is equal to a smaller value between an upper-limit transmission power and a target transmission power, where the target transmission power is linear with the target amount of adjustment, and the upper-limit transmission power is default or configurable; the first control signaling comprises a first field, the first field being a counter DAI field or total DAI field; the first signaling set comprises a target signaling subset, the target signaling subset comprising at least one control signaling; a first intermediate quantity is used to determine the first reference HARQ-ACK bit number, the first intermediate quantity being equal to a value of the first field comprised in the first control signaling being subtracted by a number of control signaling(s) comprised in the target signaling subset; the first information block is used to determine that the first control signaling comprises a second field, the second field comprised in the first control signaling being used to determine whether the first control signaling belongs to the target signaling subset.

In one subembodiment, when the value of the second field comprised in the first control signaling is equal to a first target value, the first control signaling does not belong to the target signaling subset; when the value of the second field comprised in the first control signaling is not equal to the first target value, the first control signaling belongs to the target signaling subset, the first target value is a non-negative integer.

In one subembodiment, when the value of the second field comprised in the first control signaling is equal to a first target value, the first control signaling belongs to the target signaling subset; when the value of the second field comprised in the first control signaling is not equal to the first target value, the first control signaling does not belong to the target signaling subset, the first target value is a non-negative integer

In one subembodiment, the first reference HARQ-ACK bit number is linear with a second intermediate quantity, and the second intermediate quantity is equal to a result yielded by the first intermediate quantity modulo a first value then being multiplied by a second value; the first value is equal to 2 to the power of T, T being a number of bits comprised in a counter DAI field, and the second value is equal to 1 or 2.

In one embodiment, the first receiver 1401 receives a first information block and a first signaling set, the first signaling set comprising multiple control signalings, and a first control signaling being a control signaling comprised in the first signaling set, each control signaling in the first signaling set being a DCI format; the first transmitter 1402 transmits a first PUCCH with a first transmission power, the first PUCCH carrying at least one HARQ-ACK bit; herein, a first reference HARQ-ACK bit number is a number of HARQ-ACK bit(s) determined for obtaining a transmission power of PUCCH, and the first reference HARQ-ACK bit number is used to determine a target amount of adjustment, the first transmission power is equal to a smaller value between an upper-limit transmission power and a target transmission power, where the target transmission power is linear with the target amount of adjustment, and the upper-limit transmission power is default or configurable; the first control signaling comprises a first field, the first field being a counter DAI field or total DAI field; the first signaling set comprises a target signaling subset, the target signaling subset comprising at least one control signaling; a first intermediate quantity is used to determine the first reference HARQ-ACK bit number, the first intermediate quantity being equal to a value of the first field comprised in the first control signaling being subtracted by a number of control signaling(s) comprised in the target signaling subset; the first control signaling comprises P fields, P being a positive integer, the first information block being used to determine whether the P fields comprised in the first control signaling are used to determine whether the first control signaling belongs to the target signaling subset.

In one embodiment, a target value set comprises P target values; when the values of the P fields comprised in the first control signaling are respectively equal to the P target values in the target value set, the first control signaling does not belong to the target signaling subset; otherwise, the first control signaling belongs to the target signaling subset.

In one embodiment, a target value set comprises P target values; when the values of the P fields comprised in the first control signaling are respectively equal to the P target values in the target value set, the first control signaling belongs to the target signaling subset; otherwise, the first control signaling does not belong to the target signaling subset.

In one subembodiment, the first reference HARQ-ACK bit number is linear with a second intermediate quantity, and the second intermediate quantity is equal to a result yielded by the first intermediate quantity modulo a first value then being multiplied by a second value; the first value is equal to 2 to the power of T, T being a number of bits comprised in a counter DAI field, and the second value is equal to 1 or 2.

### Embodiment 15

Embodiment 15 illustrates a structure block diagram of a processing device in a second node, as shown in FIG. 15. In FIG. 15, a processing device 1500 in a second node comprises a second transmitter 1501 and a second receiver 1502.

In one embodiment, the second node 1500 is a UE.

In one embodiment, the second node 1500 is a base station.

In one embodiment, the second node 1500 is satellite equipment.

In one embodiment, the second node 1500 is a relay node.

In one embodiment, the second node 1500 is vehicle-mounted communication equipment.

In one embodiment, the second node 1500 is UE supporting V2X communications.

In one embodiment, the second transmitter 1501 comprises at least one of the antenna 420, the transmitter 418, the multi-antenna transmitting processor 471, the transmitting processor 416, the controller/processor 475 or the memory 476 in FIG. 4 of the present application.

In one embodiment, the second transmitter 1501 comprises at least the first five of the antenna 420, the transmitter 418, the multi-antenna transmitting processor 471, the transmitting processor 416, the controller/processor 475 and the memory 476 in FIG. 4 of the present application.

In one embodiment, the second transmitter 1501 comprises at least the first four of the antenna 420, the transmitter 418, the multi-antenna transmitting processor 471, the transmitting processor 416, the controller/processor 475 and the memory 476 in FIG. 4 of the present application.

In one embodiment, the second transmitter 1501 comprises at least the first three of the antenna 420, the transmitter 418, the multi-antenna transmitting processor 471, the transmitting processor 416, the controller/processor 475 and the memory 476 in FIG. 4 of the present application.

In one embodiment, the second transmitter 1501 comprises at least the first two of the antenna 420, the transmitter 418, the multi-antenna transmitting processor 471, the transmitting processor 416, the controller/processor 475 and the memory 476 in FIG. 4 of the present application.

In one embodiment, the second receiver 1502 comprises at least one of the antenna 420, the receiver 418, the multi-antenna receiving processor 472, the receiving processor 470, the controller/processor 475 or the memory 476 in FIG. 4 of the present application.

In one embodiment, the second receiver 1502 comprises at least the first five of the antenna 420, the receiver 418, the multi-antenna receiving processor 472, the receiving processor 470, the controller/processor 475 and the memory 476 in FIG. 4 of the present application.

In one embodiment, the second receiver 1502 comprises at least the first four of the antenna 420, the receiver 418, the multi-antenna receiving processor 472, the receiving processor 470, the controller/processor 475 and the memory 476 in FIG. 4 of the present application.

In one embodiment, the second receiver 1502 comprises at least the first three of the antenna 420, the receiver 418, the multi-antenna receiving processor 472, the receiving processor 470, the controller/processor 475 and the memory 476 in FIG. 4 of the present application.

In one embodiment, the second receiver 1502 comprises at least the first two of the antenna 420, the receiver 418, the multi-antenna receiving processor 472, the receiving processor 470, the controller/processor 475 and the memory 476 in FIG. 4 of the present application.

In Embodiment 15, the second transmitter 1501 transmits a first information block and a first signaling set, the first signaling set comprising multiple control signalings, and a first control signaling being a control signaling comprised in the first signaling set; the second receiver 1502 receives a first PUCCH transmitted with a first transmission power, the first PUCCH carrying at least one HARQ-ACK bit; herein, a first reference HARQ-ACK bit number is used to determine the first transmission power, the first reference HARQ-ACK bit number being a positive integer; the first control signaling comprises a first field, a value of the first field comprised in the first control signaling being a positive integer; a first intermediate quantity is used to determine the first reference HARQ-ACK bit number, the first intermediate quantity being linear with the value of the first field comprised in the first control signaling; the first signaling set comprises a target signaling subset, the target signaling subset comprising at least one control signaling, the first intermediate quantity being linear with a number of control signaling(s) comprised in the target signaling subset, the first information block being used to determine whether the first control signaling belongs to the target signaling subset.

In one embodiment, the first intermediate quantity is equal to the value of the first field comprised in the first control signaling being subtracted by the number of control signaling(s) comprised in the target signaling subset.

In one embodiment, the first reference HARQ-ACK bit number is linear with a second intermediate quantity, and the second intermediate quantity is equal to a result yielded by the first intermediate quantity modulo a first value then being multiplied by a second value; the first value is equal to 2 to the power of T, T being a number of bits comprised in a counter DAI field, and the second value is a positive integer.

In one embodiment, the first information block is used to determine which HARQ processes in a first HARQ process set are HARQ processes of a first type, and the first control signaling is used to indicate a target HARQ process, the target HARQ process being a HARQ process in the first HARQ process set; when the target HARQ process is a HARQ process of the first type, the first control signaling does not belong to the target signaling subset; when the target HARQ process is not a HARQ process of the first type, the first control signaling belongs to the target signaling subset.

In one embodiment, the first control signaling is a last DCI format in the first signaling set.

In one embodiment, all control signalings in the first signaling set are detected in a first resource pool, the first resource pool comprising at least one time interval in time domain; the first control signaling is detected in a last one of the at least one time interval.

In one embodiment, the second transmitter 1501 transmits a first PDSCH group; herein, the first PDSCH group comprises at least one PDSCH, and at least one control signaling in the target signaling subset is used to schedule the first PDSCH group, the first PDSCH group being used to determine the first reference HARQ-ACK bit number.

In one embodiment, the first reference HARQ-ACK bit number is used to determine a target amount of adjustment, and the first transmission power is equal to a smaller value between an upper-limit transmission power and a target transmission power, the target amount of adjustment being used to determine the target transmission power, and the upper-limit transmission power being default or configurable.

The ordinary skill in the art may understand that all or part of steps in the above method may be implemented by instructing related hardware through a program. The program may be stored in a computer readable storage medium, for example Read-Only-Memory (ROM), hard disk or compact disc, etc. Optionally, all or part of steps in the above embodiments also may be implemented by one or more integrated circuits. Correspondingly, each module unit in the above embodiment may be realized in the form of hardware, or in the form of software function modules. The present application is not limited to any combination of hardware and software in specific forms. The first node in the present application includes but is not limited to mobile phones, tablet computers, notebooks, network cards, low-consumption equipment, enhanced MTC (eMTC) terminals, NB-IOT terminals, vehicle-mounted communication equipment, aircrafts, airplanes, unmanned aerial vehicles, telecontrolled aircrafts, etc. The second node in the present application includes but is not limited to mobile phones, tablet computers, notebooks, network cards, low-consumption equipment, enhanced MTC (eMTC) terminals, NB-IOT terminals, vehicle-mounted communication equipment, aircrafts, airplanes, unmanned aerial vehicles, telecontrolled aircrafts, etc. The UE or terminal in the present application includes but is not limited to mobile phones, tablet computers, notebooks, network cards, low-consumption equipment, enhanced MTC (eMTC) terminals, NB-IOT terminals, vehicle-mounted communication equipment, aircrafts, airplanes, unmanned aerial vehicles, telecontrolled aircrafts, etc. The base station in the present application includes but is not limited to macro-cellular base stations, microcellular base stations, home base stations, relay base station, eNB, gNB, Transmitter Receiver Point (TRP), GNSS, relay satellite, satellite base station, airborne base station, test apparatus, test equipment or test instrument, and other radio communication equipment.

**Claims**

1. A user equipment, UE (1400), comprising:

    a receiver (1401) configured to:

        - receive an information block; and
        - receive a signaling set, the signaling set including at least a first control signaling, the first control signaling including a field having a value, the signaling set further including a target signaling subset, the target signaling subset comprising X control signalings, wherein X is one or more, and wherein the information block is used to determine whether the first control signaling belongs to the target signaling subset; and

a transmitter (1402) configured to transmit a physical uplink control channel, PUCCH, with a transmission power, the PUCCH carrying at least one hybrid automatic repeat request acknowledge, HARQ-ACK, bit, wherein a first intermediate quantity is linear with the value of the field and is linear with X, a reference HARQ-ACK bit number is based on the first intermediate quantity, and the transmission power is based on the reference HARQ-ACK bit number.

2. The UE according to claim 1, **characterized in that** the first intermediate quantity is equal to the value of the field subtracted by X.

3. The UE according to claim 1 or 2, **characterized in that**:
the field is a downlink assignment index, DAI, field, the reference HARQ-ACK bit number is equal to a sum of multiple values, a second intermediate quantity is one of the multiple values, the second intermediate quantity is equal to the first intermediate quantity modulo $2^T$ then multiplied by 1 or 2, T is a non-zero number of bits comprised in a counter DAI field, and each control signaling in the signaling set is downlink control information, DCI, each having a respective DCI format.

4. The UE according to any of claims 1 to 3, **characterized in that**:
the information block is used to determine which HARQ processes in a first HARQ process set are HARQ processes of a first type, the first control signaling is a last control signaling in the signaling set and each of the X control signalings is related to a HARQ process of the first type.

5. The UE according to claim 4, **characterized in that**:

a HARQ process of the first type is a HARQ process with disabled HARQ information; a HARQ process of a second type is a HARQ process with enabled HARQ information; and
a control signaling of the first type schedules a physical downlink shared channel, PDSCH, that provides at least one transport block for a HARQ process of the second type, or the control signaling of the first type has associated HARQ-ACK information without scheduling a PDSCH.

6. The UE according to any of claims 1 to 5, **characterized in that**:
each control signaling in the signaling set is used to schedule a PDSCH; the reference HARQ-ACK bit number is used to determine a target amount of adjustment, the transmission power is equal to the lesser of an upper-limit transmission power and a target transmission power, the target amount of adjustment is used to determine the target transmission power, and the upper-limit transmission power is default or configurable.

7. A base station (1500), comprising:

a transmitter (1501) configured to:

- transmit an information block; and
- transmit a signaling set, the signaling set including at least a first control signaling, the first control signaling including a field having a value, the signaling set further including a target signaling subset, the target signaling subset comprising X control signalings, wherein X is one or more, and wherein the information block is used to determine whether the first control signaling belongs to the target signaling subset; and

a receiver (1502) configured to receive a physical uplink control channel, PUCCH, transmitted with a transmission power, the PUCCH carrying at least one hybrid automatic repeat request acknowledge, HARQ-ACK, bit, wherein a first intermediate quantity is linear with the value of the field and is linear with X, a reference HARQ-ACK bit number is based on the first intermediate quantity, and the transmission power is based on the reference HARQ-ACK bit number.

8. The base station according to claim 7, **characterized in that**:
the information block is used to determine which HARQ processes in a first HARQ process set are HARQ processes of a first type, the first control signaling is a last control signaling in the signaling set, and each of the X control signalings is related to a HARQ process of the first type.

9. A method (100) performed by a user equipment, UE (1400), the method comprising:

receiving (101, S511) an information block;
receiving (101, S511) a signaling set, the signaling set including at least a first control signaling, the first control signaling including a field having a value, the signaling set further including a target signaling subset, the target signaling subset comprising X control signalings, wherein X is one or more, and wherein the information block is used to determine whether the first control signaling belongs to the target signaling subset; and
transmitting (102, S512) a physical uplink control channel, PUCCH, with a transmission power, the PUCCH carrying at least one hybrid automatic repeat request acknowledge, HARQ-ACK, bit, wherein a first intermediate quantity is linear with the value of the field and is linear with X, a reference HARQ-ACK bit number is based on the first intermediate quantity, and the transmission power is based on the reference HARQ-ACK bit number.

10. The method according to claim 9, **characterized in that** the first intermediate quantity is equal to the value of the field subtracted by X.

11. The method according to claim 9 or 10, **characterized in that**:
the field is a downlink assignment index, DAI, field, the reference HARQ-ACK bit number is equal to a sum of multiple values, a second intermediate quantity is one of the multiple values, the second intermediate quantity is equal to the first intermediate quantity modulo $2^T$ then multiplied by 1 or 2, T is a non-zero number of bits comprised in a counter DAI field, and each control signaling in the signaling set is downlink control information, DCI, each having a respective DCI format.

12. The method according to any of claims 9 to 11, **characterized in that**:
the information block is used to determine which HARQ processes in a first HARQ process set are HARQ processes of a first type, the first control signaling is a last control signaling in the signaling set and each of the X control signalings is related to a HARQ process of the first type.

13. The method according to claim 12, **characterized in that**:

a HARQ process of the first type is a HARQ process with disabled HARQ information; a HARQ process of a second type is a HARQ process with enabled HARQ information; and a control signaling of the first type schedules a physical downlink shared channel, PDSCH, that provides at least one transport block for a HARQ process of the second type, or the control signaling of the first type has associated HARQ-ACK information without scheduling a PDSCH.

14. The method according to any of claims 9 to 13, **characterized in that**:
each control signaling in the signaling set is used to schedule a PDSCH; the reference HARQ-ACK bit number is used to determine a target amount of adjustment, the transmission power is equal to the lesser of an upper-limit transmission power and a target transmission power, the target amount of adjustment is used to determine the target transmission power, and the upper-limit transmission power is default or configurable.

15. A method performed by a base station (1500), the method comprising:

transmitting (S521) an information block;
transmitting (S521) a signaling set, the signaling set including at least a first control signaling, the first control signaling including a field having a value, the signaling set further including a target signaling subset, the target signaling subset comprising X control signalings, wherein X is one or more, and wherein the information block is used to determine whether the first control signaling belongs to the target signaling subset; and
receiving (S522) a physical uplink control channel, PUCCH, transmitted with a transmission power, the PUCCH carrying at least one hybrid automatic repeat request acknowledge, HARQ-ACK, bit, wherein a first intermediate quantity is linear with the value of the field and is linear with X, a reference HARQ-ACK bit number is based on the first intermediate quantity, and the transmission power is based on the reference HARQ-ACK bit number.

**Patentansprüche**

1. Benutzervorrichtung, UE, (1400), die umfasst:

einen Empfänger (1401), der konfiguriert ist, um:

- einen Informationsblock zu empfangen; und
- einen Signalisierungssatz zu empfangen, wobei der Signalisierungssatz zumindest eine erste Steuersignalisierung umfasst, wobei die erste Steuersignalisierung ein Feld mit einem Wert aufweist, wobei der Signalisierungssatz ferner einen Zielsignalisierungsuntersatz umfasst, wobei der Zielsignalisierungsuntersatz X Steuersignalisierungen umfasst, wobei X eins oder mehr beträgt, und wobei der Informationsblock verwendet wird, um zu bestimmen, ob die erste Steuersignalisierung zu dem Zielsignalisierungsuntersatz gehört; und

einen Sender (1402), der konfiguriert ist, um einen physikalischen Uplink-Steuerkanal, PUCCH, mit einer Sendeleistung zu übermitteln, wobei der PUCCH zumindest ein hybrides automatisches Wiederholungsanforderungszurkenntnisnahme-, HARQ-ACK-, Bit trägt, wobei sich eine erste Zwischengröße linear zum Wert des Feldes und linear zu X verhält, eine Referenz-HARQ-ACK-Bitanzahl auf der ersten Zwischengröße basiert und die Sendeleistung auf der Referenz-HARQ-ACK-Bitanzahl basiert.

2. UE gemäß Anspruch 1, **dadurch gekennzeichnet, dass** die erste Zwischengröße gleich dem Wert des Feldes abzüglich X ist.

3. UE gemäß Anspruch 1 oder 2, **dadurch gekennzeichnet, dass**:
das Feld ein Downlink-Zuweisungsindex-, DAI-, Feld ist, die Referenz-HARQ-ACK-Bitanzahl gleich einer Summe mehrerer Werte ist, eine zweite Zwischengröße einer der mehreren Werte ist, die zweite Zwischengröße gleich der ersten Zwischengröße modulo $2^T$ und dann multipliziert mit 1 oder 2 ist, T eine von Null verschiedene Anzahl von Bits ist, die in einem Zähler-DAI-Feld umfasst ist, und jede Steuersignalisierung in dem Signalisierungssatz Downlink-Steuerinformationen, DCI, ist, die jeweils ein entsprechendes DCI-Format aufweisen.

4. UE gemäß einem der Ansprüche 1 bis 3, **dadurch gekennzeichnet, dass**:
der Informationsblock verwendet wird, um zu bestimmen, welche HARQ-Prozesse in einem ersten HARQ-Prozesssatz HARQ-Prozesse eines ersten Typs sind, die erste Steuersignalisierung eine letzte Steuersignalisierung im Signalisierungssatz ist und jede der X Steuersignalisierungen sich auf einen HARQ-Prozess des ersten Typs bezieht.

5. UE gemäß Anspruch 4, **dadurch gekennzeichnet, dass**:

ein HARQ-Prozess des ersten Typs ein HARQ-Prozess mit deaktivierten HARQ-Informationen ist; ein HARQ-Prozess eines zweiten Typs ein HARQ-Prozess mit aktivierten HARQ-Informationen ist; und
eine Steuersignalisierung des ersten Typs einen gemeinsam genutzten physikalischen Downlink-Kanal, PDSCH, plant, der zumindest einen Transportblock für einen HARQ-Prozess des zweiten Typs bereitstellt, oder die Steuersignalisierung des ersten Typs assoziierte HARQ-ACK-Informationen aufweist, ohne einen PDSCH zu planen.

6. UE gemäß einem der Ansprüche 1 bis 5, **dadurch gekennzeichnet, dass**:
jede Steuersignalisierung im Signalisierungssatz verwendet wird, um einen PDSCH zu planen; die Referenz-HARQ-ACK-Bitanzahl verwendet wird, um einen Sollanpassungsbetrag zu bestimmen, die Sendeleistung gleich dem kleineren Wert aus einer oberen Sendeleistungsgrenze und einer Sollsendeleistung ist, der Sollanpassungsbetrag verwendet wird, um die Sollsendeleistung zu bestimmen, und die obere Sendeleistungsgrenze standardmäßig festgelegt oder konfigurierbar ist.

7. Basisstation (1500), die umfasst:

einen Sender (1501), der konfiguriert ist, um:

- einen Informationsblock zu übertragen; und
- einen Signalisierungssatz zu übertragen, wobei der Signalisierungssatz zumindest eine erste Steuersignalisierung umfasst, wobei die erste Steuersignalisierung ein Feld mit einem Wert aufweist, wobei der Signalisierungssatz ferner einen Zielsignalisierungsuntersatz umfasst, wobei der Zielsignalisierungsuntersatz X Steuersignalisierungen umfasst, wobei X eins oder mehr beträgt, und wobei der Informationsblock verwendet wird, um zu bestimmen, ob die erste Steuersignalisierung zum Zielsignalisierungsuntersatz gehört; und

einen Empfänger (1502), der konfiguriert ist, um einen physikalischen Uplink-Steuerkanal, PUCCH, zu empfangen, der mit einer Sendeleistung übertragen wird, wobei der PUCCH zumindest ein hybrides automatisches Wiederholungsanforderungszurkenntnisnahme-, HARQ-ACK-, Bit trägt, wobei sich eine erste Zwischengröße linear zum Wert des Feldes und linear zu X verhält, eine Referenz-HARQ-ACK-Bitanzahl auf der ersten Zwischengröße basiert und die Sendeleistung auf der Referenz-HARQ-ACK-Bitanzahl basiert.

8. Basisstation nach Anspruch 7, **dadurch gekennzeichnet, dass**:
der Informationsblock verwendet wird, um zu bestimmen, welche HARQ-Prozesse in einem ersten HARQ-Prozesssatz HARQ-Prozesse eines ersten Typs sind, die erste Steuersignalisierung eine letzte Steuersignalisierung im Signalisierungssatz ist und jede der X Steuersignalisierungen auf einen HARQ-Prozess des ersten Typs bezogen ist.

9. Verfahren (100), das von einer Benutzervorrichtung, UE, (1400) ausgeführt wird, wobei das Verfahren umfasst:

Empfangen (101, S511) eines Informationsblocks;
Empfangen (101, S511) eines Signalisierungssatzes, wobei der Signalisierungssatz zumindest eine erste Steuersignalisierung umfasst, wobei die erste Steuersignalisierung ein Feld mit einem Wert aufweist, wobei der Signalisierungssatz ferner einen Zielsignalisierungsuntersatz umfasst, wobei der Zielsignalisierungsuntersatz X Steuersignalisierungen umfasst, wobei X eins oder mehr beträgt, und wobei der Informationsblock verwendet wird, um zu bestimmen, ob die erste Steuersignalisierung zum Zielsignalisierungsuntersatz gehört; und Übertragen (102, S512) eines physikalischen Uplink-Steuerkanals, PUCCH, mit einer Sendeleistung, wobei der PUCCH zumindest ein hybrides automatisches Wiederholungsanforderungszurkenntnisnahme-, HARQ-ACK-, Bit trägt, wobei sich eine erste Zwischengröße linear zum Wert des Feldes und linear zu X verhält, eine Referenz-HARQ-ACK-Bitanzahl auf der ersten Zwischengröße basiert und die Sendeleistung auf der Referenz-HARQ-ACK-Bitanzahl basiert.

10. Verfahren nach Anspruch 9, **dadurch gekennzeichnet, dass** die erste Zwischengröße gleich dem Wert des Feldes abzüglich X ist.

11. Verfahren nach Anspruch 9 oder 10, **dadurch gekennzeichnet, dass**: das Feld ein Downlink-Zuweisungsindex-, DAI-, Feld ist, die Referenz-HARQ-ACK-Bitanzahl gleich einer Summe mehrerer Werte ist, eine zweite Zwischengröße einer der mehreren Werte ist, die zweite Zwischengröße gleich der ersten Zwischengröße modulo $2^T$ und dann multipliziert mit 1 oder 2 ist, T eine von Null verschiedene Anzahl von Bits ist, die in einem Zähler-DAI-Feld umfasst ist, und jede Steuersignalisierung in dem Signalisierungssatz Downlink-Steuerinformationen, DCI, ist, die jeweils ein entsprechendes DCI-Format aufweisen.

12. Verfahren nach einem der Ansprüche 9 bis 11, **dadurch gekennzeichnet, dass**: der Informationsblock verwendet wird, um zu bestimmen, welche HARQ-Prozesse in einem ersten HARQ-Prozesssatz HARQ-Prozesse eines ersten Typs sind, die erste Steuersignalisierung eine letzte Steuersignalisierung im Signalisierungssatz ist und jede der X Steuersignalisierungen auf einen HARQ-Prozess des ersten Typs bezogen ist.

13. Verfahren nach Anspruch 12, **dadurch gekennzeichnet, dass**:

ein HARQ-Prozess des ersten Typs ein HARQ-Prozess mit deaktivierten HARQ-Informationen ist; ein HARQ-Prozess eines zweiten Typs ein HARQ-Prozess mit aktivierten HARQ-Informationen ist; und eine Steuersignalisierung des ersten Typs einen gemeinsam genutzten physikalischen Downlink-Kanal, PDSCH, plant, der zumindest einen Transportblock für einen HARQ-Prozess des zweiten Typs bereitstellt, oder die Steuersignalisierung des ersten Typs assoziierte HARQ-ACK-Informationen aufweist, ohne einen PDSCH zu planen.

14. Verfahren nach einem der Ansprüche 9 bis 13, **dadurch gekennzeichnet, dass**: jede Steuersignalisierung in dem Signalisierungssatz verwendet wird, um einen PDSCH zu planen; die Referenz-HARQ-ACK-Bitanzahl verwendet wird, um einen Sollanpassungsbetrag zu bestimmen, die Sendeleistung gleich dem kleineren Wert aus einer oberen Sendeleistungsgrenze und einer Sollsendeleistung ist, der Sollanpassungsbetrag verwendet wird, um die Sollsendeleistung zu bestimmen, und die obere Sendeleistungsgrenze standardmäßig festgelegt oder konfigurierbar ist.

15. Verfahren, das von einer Basisstation (1500) ausgeführt wird, wobei das Verfahren umfasst:

Übertragen (S521) eines Informationsblocks; Übertragen (S521) eines Signalisierungssatzes, wobei der Signalisierungssatz zumindest eine erste Steuersignalisierung umfasst, wobei die erste Steuersignalisierung ein Feld mit einem Wert aufweist, wobei der Signalisierungssatz ferner einen Zielsignalisierungsuntersatz umfasst, wobei der Zielsignalisierungsuntersatz X Steuersignalisierungen umfasst, wobei X eins oder mehr beträgt, und wobei der Informationsblock verwendet wird, um zu bestimmen, ob die erste Steuersignalisierung zum Zielsignalisierungsuntersatz gehört; und Empfangen (S522) eines physikalischen Uplink-Steuerkanals, PUCCH, der mit einer Sendeleistung übertragen wird, wobei der PUCCH zumindest ein hybrides automatisches Wiederholungsanforderungszurkenntnisnahme-, HARQ-ACK-, Bit trägt, wobei sich eine erste Zwischengröße linear zum Wert des Feldes und linear zu X verhält, eine Referenz-HARQ-ACK-Bitanzahl auf der ersten Zwischengröße basiert und die Sendeleistung auf der Referenz-HARQ-ACK-Bitanzahl basiert.

**Revendications**

1. Équipement utilisateur, UE (1400), comprenant :

un récepteur (1401) configuré pour :

- recevoir un bloc d'informations ; et
- recevoir un ensemble de signalisation, l'ensemble de signalisation comprenant au moins une première signalisation de commande, la première signalisation de commande comprenant un champ ayant une valeur, l'ensemble de signalisation comprenant en outre un sous-ensemble de signalisation cible, le sous-ensemble de signalisation cible comprenant X signalisations de commande, dans lequel X est un ou plus, et dans lequel le bloc d'informations est utilisé pour déterminer si la première signalisation de commande appartient au sous-ensemble de signalisation cible ; et

un émetteur (1402) configuré pour transmettre un canal de commande de liaison montante physique, PUCCH, avec une puissance d'émission, le PUCCH transportant au moins un bit d'accusé de réception de demande de retransmission automatique hybride, HARQ-ACK, dans lequel une première grandeur intermédiaire est linéaire avec la valeur du champ et est linéaire avec X, un nombre de bits HARQ-ACK de référence est basé sur ladite première grandeur intermédiaire, et la puissance d'émission est basée sur le nombre de bits HARQ-ACK de référence.

2. UE selon la revendication 1, **caractérisé en ce que** la première grandeur intermédiaire est égale à la valeur du champ diminuée de X.

3. UE selon la revendication 1 ou 2, **caractérisé en ce que** :
le champ est un champ d'indice d'attribution de liaison descendante, DAI, le nombre de bits HARQ-ACK de référence est égal à une somme de plusieurs valeurs, une seconde grandeur intermédiaire est l'une des valeurs multiples, la seconde grandeur intermédiaire est égale à la première grandeur intermédiaire modulo $2^T$ puis multipliée par 1 ou 2, T est un nombre non nul de bits compris dans un champ DAI compteur, et chaque signalisation de commande dans l'ensemble de signalisation est une information de commande de liaison descendante, DCI, chacune ayant un format DCI respectif.

4. UE selon l'une quelconque des revendications 1 à 3, **caractérisé en ce que** :
le bloc d'informations est utilisé pour déterminer quels processus HARQ dans un premier ensemble de processus HARQ sont des processus HARQ d'un premier type, la première signalisation de commande est une dernière signalisation de commande dans l'ensemble de signalisation et chacune des X signalisations de commande est liée à un processus HARQ du premier type.

5. UE selon la revendication 4, **caractérisé en ce que** :

un processus HARQ du premier type est un processus HARQ avec des informations HARQ désactivées ; un processus HARQ d'un second type est un processus HARQ avec des informations HARQ activées ; et
une signalisation de commande du premier type planifie un canal partagé de liaison descendante physique, PDSCH, qui fournit au moins un bloc de transport pour un processus HARQ du second type, ou la signalisation de commande du premier type a des informations HARQ-ACK associées sans planification de PDSCH.

6. UE selon l'une quelconque des revendications 1 à 5, **caractérisé en ce que** :
chaque signalisation de commande dans l'ensemble de signalisation est utilisée pour planifier un PDSCH ; le nombre de bits HARQ-ACK de référence est utilisé pour déterminer une quantité cible d'ajustement, la puissance d'émission est égale à la plus faible entre une puissance d'émission limite supérieure et une puissance d'émission cible, la quantité cible d'ajustement est utilisée pour déterminer la puissance d'émission cible, et la puissance d'émission limite supérieure est par défaut ou configurable.

7. Station de base (1500) comprenant :

un émetteur (1501) configuré pour :

- transmettre un bloc d'informations ; et
- transmettre un ensemble de signalisation, l'ensemble de signalisation comprenant au moins une première signalisation de commande, la première signalisation de commande comprenant un champ ayant une valeur, l'ensemble de signalisation comprenant en outre un sous-ensemble de signalisation cible, le sous-ensemble de signalisation cible comprenant X signalisations de commande, dans lequel X est un ou plus, et dans lequel le bloc d'informations est utilisé pour déterminer si la première signalisation de commande appartient au sous-ensemble de signalisation cible ; et

un récepteur (1502) configuré pour recevoir un canal de commande de liaison montante physique, PUCCH, transmis avec une puissance d'émission, le PUCCH transportant au moins un bit d'accusé de réception de demande de retransmission automatique hybride, HARQ-ACK, dans lequel une première grandeur intermédiaire est linéaire avec la valeur du champ et est linéaire avec X, un nombre de bits HARQ-ACK de référence est basé sur la première grandeur intermédiaire, et la puissance d'émission est basée sur le nombre de bits HARQ-ACK de référence.

8. Station de base selon la revendication 7, **caractérisée en ce que** :
le bloc d'informations est utilisé pour déterminer quels processus HARQ dans un premier ensemble de processus HARQ sont des processus HARQ d'un premier type, la première signalisation de commande est une dernière signalisation de commande dans l'ensemble de signalisation, et chacune des X signalisations de commande est liée à un processus HARQ du premier type.

9. Procédé mis en œuvre par un équipement utilisateur, UE, (1400), le procédé comprenant :

la réception (101, S511) d'un bloc d'informations ;
la réception (101, S511) d'un ensemble de signalisation, l'ensemble de signalisation comprenant au moins une première signalisation de commande, la première signalisation de commande comprenant un champ ayant une valeur, l'ensemble de signalisation comprenant en outre un sous-ensemble de signalisation cible, le sous-ensemble de signalisation cible comprenant X signalisations de commande, dans lequel X est un ou plus, et dans lequel le bloc d'informations est utilisé pour déterminer si la première signalisation de commande appartient au sous-ensemble de signalisation cible ; et
la transmission (102, S512) d'un canal de commande de liaison montante physique, PUCCH, avec une puissance d'émission, le PUCCH transportant au moins un bit d'accusé de réception de demande de retransmission automatique hybride, HARQ-ACK, dans lequel une première grandeur intermédiaire est linéaire avec la valeur du champ et est linéaire avec X, un nombre de bits HARQ-ACK de référence est basé sur la première grandeur intermédiaire, et la puissance d'émission est basée sur le nombre de bits HARQ-ACK de référence.

10. Procédé selon la revendication 9, **caractérisé en ce que** la première grandeur intermédiaire est égale à la valeur du champ diminuée de X.

11. Procédé selon la revendication 9 ou 10, **caractérisé en ce que** :
le champ est un champ d'indice d'attribution de liaison descendante, DAI, le nombre de bits HARQ-ACK de référence est égal à une somme de plusieurs valeurs, une seconde grandeur intermédiaire est l'une des multiples valeurs, la seconde grandeur intermédiaire est égale à la première grandeur intermédiaire modulo $2^T$ puis multipliée par 1 ou 2, T est un nombre non nul de bits compris dans un champ DAI compteur, et chaque signalisation de commande dans l'ensemble de signalisation est une information de commande de liaison descendante, DCI, chacune ayant un format DCI respectif.

12. Procédé selon l'une quelconque des revendications 9 à 11, **caractérisé en ce que** :
le bloc d'informations est utilisé pour déterminer quels processus HARQ dans un premier ensemble de processus HARQ sont des processus HARQ d'un premier type, la première signalisation de commande est une dernière signalisation de commande dans l'ensemble de signalisation et chacune des X signalisations de commande est liée à un processus HARQ du premier type.

13. Procédé selon la revendication 12, **caractérisé en ce que** :

un processus HARQ du premier type est un processus HARQ avec des informations HARQ désactivées ; un processus HARQ d'un second type est un processus HARQ avec des informations HARQ activées ; et
une signalisation de commande du premier type planifie un canal partagé de liaison descendante physique, PDSCH, qui fournit au moins un bloc de transport pour un processus HARQ du second type, ou la signalisation de commande du premier type a des informations HARQ-ACK associées sans planification de PDSCH.

14. Procédé selon l'une quelconque des revendications 9 à 13, **caractérisé en ce que** :
chaque signalisation de commande dans l'ensemble de signalisation est utilisée pour planifier un PDSCH ; le nombre de bits HARQ-ACK de référence est utilisé pour déterminer une quantité cible d'ajustement, la puissance d'émission est égale à la plus faible entre une puissance d'émission limite supérieure et une puissance d'émission cible, la quantité cible d'ajustement est utilisée pour déterminer la puissance d'émission cible, et la puissance d'émission limite supérieure est par défaut ou configurable.

15. Procédé mis en œuvre par une station de base (1500), le procédé comprenant :

la transmission (S521) d'un bloc d'informations ;
la transmission (S521) d'un ensemble de signalisation, l'ensemble de signalisation comprenant au moins une première signalisation de commande, la première signalisation de commande comprenant un champ ayant une valeur, l'ensemble de signalisation comprenant en outre un sous-ensemble de signalisation cible, le sous-ensemble de signalisation cible comprenant X signalisations de commande, dans lequel X est un ou plus, et dans lequel le bloc d'informations est utilisé pour déterminer si la première signalisation de commande appartient au sous-ensemble de signalisation cible ; et la réception (S522) d'un canal de commande de liaison montante physique, PUCCH, transmis avec une puissance d'émission, le PUCCH transportant au moins un bit d'accusé de réception de demande de retransmission automatique hybride, HARQ-ACK, dans lequel une première grandeur intermédiaire est linéaire avec la valeur du champ et est linéaire avec X, un nombre de bits HARQ-ACK de référence est basé sur la première grandeur intermédiaire, et la puissance d'émission est basée sur le nombre de bits HARQ-ACK de référence.

**100**

First node

receiving first information block
and first signaling set —101

transmitting first
PUCCH with first transmission
power —102

FIG. 1

**EPS 200**

HSS —220

NR-RAN
**202**

UE —201

NR NodeB —203

other NR
Nodes B —204

MME/A
MF/UPF —211

other MMEs/
AMFs/UPFs —214

S-GW —212

P-GW —213

Internet
service —230

5G-CN/EPC
**210**

FIG. 2

Control plane
**300**

L3

RRC —306

L2

PDCP —304

RLC —303

MAC —302

L1

PHY —301

305

User plane
**350**

L2

SDAP —356

PDCP —354

RLC —353

MAC —352

L1

PHY —351

355

FIG. 3

FIG. 4

FIG. 5

| First reference HARQ-ACK bit number | ← linear with | Second intermediate quantity | ← used to determine | First intermediate quantity |

FIG. 6

| First reference HARQ-ACK bit number | → equal to | Sum of multiple values |

| The multiple values | → including | Second intermediate quantity | → equal to | The result yielded by first intermediate quantity modulo first value then multiplied by second value |

FIG. 7

First intermediate quantity = value of first field in first control signaling－number of control signaling(s) in target signaling subset

FIG. 8

| First information block | → used to determine | Which HARQ processes in first HARQ process set are HARQ processes of first type |

| First control signaling | → used to indicate | Target HARQ process | → belonging to | The first HARQ process set |

S91:is the target HARQ process a HARQ process of the first type ?

No → S92.the first control signaling belongs to target signaling subset

Yes → S93.the first control signaling does not belong to target signaling subset

FIG. 9

First reference HARQ-ACK bit number →used to determine→ First UCI bit number →used to determine→ Target amount of adjustment

First resource volume →used to determine→ Target amount of adjustment

FIG. 10

First transmission power →equal to→ the smaller value between upper-limit transmission power and target transmission power

The target transmission power →equal to→ Sum of multiple power control components

The multiple power control components →comprising→ Target amount of adjustment

FIG. 11

First control signaling →being→ Last DCI format in first signaling set

FIG. 12

All control signalings in the first signaling set — detected in first resource pool

The first resource pool →comprising...in time domain→ At least one time interval

First control signaling — detected in a last one of the at least one time interval

FIG. 13

52

First node
1400

First receiver 1401

First transmitter 1402

FIG. 14

Second node
1500

Second transmitter
1501

Second receiver 1502

FIG. 15

**REFERENCES CITED IN THE DESCRIPTION**

**Non-patent literature cited in the description**

- **VIVO**. Remaining issues on HARQ operation for NR-U. *3GPP draft, R1-2003372*